# EUROPÄISCHE PATENTSCHRIFT

(11) **EP 3 789 250 B1**
(45) Veröffentlichungstag und Bekanntmachung des Hinweises auf die Patenterteilung: **04.08.2021**
(21) Anmeldenummer: 19195986.5
(22) Anmeldetag: 06.09.2019
(51) Int. Cl.: B60R 16/037

(54) **MANAGEMENTSYSTEM UND VERFAHREN ZUR IDENTIFIZIERUNG UND ZUM BIO-MONITORING IN FAHRZEUGEN**
MANAGEMENT SYSTEM AND METHOD FOR IDENTIFYING AND BIO-MONITORING IN VEHICLES
SYSTÈME DE GESTION ET PROCÉDÉ D'IDENTIFICATION ET DE SUIVI BIOLOGIQUE DANS DES VÉHICULES

(43) Veröffentlichungstag der Anmeldung: 10.03.2021
(73) Patentinhaber: Schindler, Hermann, 67630 Niederlauterbach (FR)
(72) Erfinder: Schindler, Hermann, 67630 Niederlauterbach (FR)
(74) Vertreter: LifeTech IP Spies & Behrndt Patentanwälte PartG mbB

(56) Entgegenhaltungen:
- EP-A1- 2 871 866
- US-A1- 2015 061 895
- US-A1- 2017 153 636
- US-A1- 2018 208 204
- US-B1- 10 317 897

## Beschreibung

Die vorliegende Erfindung bezieht sich auf Managementsystem und Verfahren zur Identifizierung und zum Bio-Monitoring in Fahrzeugen. Insbesondere bezieht sich die Erfindung auf ein Identitäts- und Bio-Management-System in Fahrzeugen und anderen Fortbewegungsmitteln wie Flugzeugen und Hubschraubern.

### HINTERGRUND

Mit zunehmender Leistungsfähigkeit mobiler Geräte ergeben sich neue Einsatzgebiete, die früher undenkbar waren. Große Einsatzgebiete umfassen beispielsweise das Bio-Monitoring. So ermöglichen neuere tragbare Endgeräte wie beispielsweise Smartphones, Smartwatches, Fitnessarmbänder eine permanente Überwachung des Gesundheitszustandes des Trägers.

Ein solches Monitoring wurde bisher weitestgehend unabhängig von der konkreten Umgebung eingesetzt. Andererseits kommt es häufig in bestimmten Umgebungen zu Gesundheitsproblemen.

So können Rückenschmerzen beispielsweise ein Problem darstellen. Die Ursachen sind vielfältig und reichen von falschem oder zu langem Sitzen, Stress, mangelnde Bewegung, einseitiges Sitzen oder Stehen bis zu falschen Sitzen oder schlechten, nicht-individualisierten Sitzeinstellungen. Insbesondere beim Sitzen in Fahrzeugen wie dem Auto, LKW oder Flugzeugen kommt es zu einseitigen Belastungen. Diese werden durch lange Fahrtzeiten noch deutlich erhöht. Stress-Situationen beim Fahren können den Schmerz noch weiter steigern.

Es gibt zwar Sitze für Fahrzeuge, die sich automatisch auf die jeweils präferierte Sitzposition einstellen. Beispielsweise gibt es hierfür verschiedene Schlüssel mit Funkfernsteuerung, die der jeweiligen Person zugeordnet sind. Wenn eine Person die Tür mit dem jeweiligen Schlüssel öffnet, wird automatisch der Sitz auf eine vordefinierte Sitzposition gebracht. Diese Sitzposition ist aber nicht für den individuellen Bedarf der Person ermittelt und eingestellt, sondern die Person wählt sie als Voreinstellung nach Gefühl aus.

Außerdem gibt es konventionelle Sitze mit Massagefunktionen, um Rückenschmerzen etc. vorzubeugen oder zu lindern. DE 10 2006 052 576 B4 und CN 108 146 310 A offenbaren zum Beispiel ein Massagesystem, das auf die Straßenbeschaffenheit reagiert und die Massagefunktion entsprechend anpasst. Außerdem wird in US 9,493,130 B2 ein "Connected Vehicles" offenbart, bei dem die Gefühlslage eines Nutzers in einem Spracheingabegerät erkannt wird. US2015/016714 offenbart ein tragbares Gerät, das erkennt, wenn es in einem Fahrzeug ist. Es kann auch die Müdigkeit des Nutzers erkennen und es kann über eine Bluetooth-Verbindung im Lautsprecher des Fahrzeugs eine Warnung ausgeben. Weitere konventionelle Sensor- und Analysesystem sind in der EP 3 000 396 B1 offenbart, die Informationen über den Ermüdungszustand der Beine oder des Rückens, biomechanische Besonderheiten aufgrund des Körperbaus etc. liefern könnten. Außerdem offenbart US 2015/061895 A1 ein bekanntes System zur vollständigen Fahrzeugüberwachung, EP 2 871 866 A1 ein Verfahren und eine Vorrichtung zur Nutzung eines fahrzeuginternen Computersystems basierend auf einem tragbaren Gerät, und US 2018/0208204 A1 ein System und ein Verfahren zum Identifizieren eines Fahrzeugfahrers basierend auf einem Bewegungsprofil. Weiterhin offenbart US 10,317,897 B1 ein tragbares Gerät für ein autonomes Fahrzeug, und US 2017/0153636 A1 ein Fahrzeug mit einer Steuereinheit und einen drahtlosen Empfänger, um mit einem tragbaren Gerät zu interagieren.

Es besteht aber nach wie vor ein Bedarf nach einem integrierten System, das gesichert und mit hoher technischer Leistungsfähigkeit und Energieeffizienz Fitness- und Bio-Management-Lösungen im Fahrzeug bereitstellt.

### Kurzbeschreibung der Erfindung

Zumindest ein Teil der obengenannten Probleme wird durch ein Management-system nach Anspruch 1, auf ein System nach Anspruch 9, ein Verfahren nach Anspruch 14 und ein Computerprogrammprodukt nach Anspruch 15 gelöst. Die abhängigen Ansprüche definieren weitere vorteilhafte Ausführungsformen für der Gegenstände der unabhängigen Ansprüche.

Die vorliegende Erfindung bezieht sich auf ein Managementsystem zur Identifikation und zum Bio-Monitoring von zumindest einem Nutzer eines Fahrzeugs mit einem personenbezogenen Modul, das ausgebildet ist, um auf persönliche Daten des Nutzers zuzugreifen und dadurch den Nutzer zu identifizieren. Das Managementsystem umfasst: ein fahrzeugbezogenes Modul und ein Kommunikationsmodul. Das fahrzeugbezogene Modul ist ausgebildet, um auf zumindest eine Fahrzeugkomponente zuzugreifen. Das Kommunikationsmodul ist ausgebildet, um einen Austausch von Daten zwischen dem personenbezogenen Modul und dem fahrzeugbezogenen Modul zu ermöglichen, auch wenn sich das personenbezogene Modul außerhalb des Fahrzeugs befindet. Das fahrzeugbezogene Modul ausgebildet weiter ist, um basierend auf den ausgetauschten Daten zumindest eine Änderung an der zumindest einen Fahrzeugkomponente vorzunehmen oder zu erlauben.

Der Begriff "fahrzeugbezogen" bezieht sich auf eine Zugehörigkeit zu dem Fahrzeug, d.h. es ist in oder an dem Fahrzeug installierbar, insbesondere kann es auch in einer Steuereinheit des Fahrzeugs installiert sein. Es kann aber auch eine eigene Datenverarbeitungseinheit aufweisen. Der Begriff "Fahrzeug" soll breit ausgelegt werden, d.h. Luft-, Wasser- oder Landfahrzeuge umfassen - solange sie zum Personentransport geeignet sind. Es versteht sich, dass das personenbezogene Modul nicht Teil des Managementsystem zu sein braucht. Wichtig ist, dass ein Austausch von Daten möglich ist.

Gemäß weiteren Ausführungsbeispielen umfasst das Fahrzeug ein oder mehrere Sensoren, die in der Lage sind, um einen Zustand oder eine Bewegung des Nutzers im Fahrzeug zu erfassen. Das fahrzeugbezogene Modul kann dann weiter ausgebildet sein, um auf den einen oder die mehreren Sensoren zuzugreifen und Informationen über den Zustand oder die Bewegung des Nutzes zu erhalten und zu verarbeiten, um zumindest eines aus dem Folgenden festzustellen:
- eine Nutzung eines bestimmten Sitzplatzes,
- eine Einstellung des Sitzes,
- eine Änderung des Fitnesszustands,
- eine Gesundheitsverschlechterung,
- eine Ermüdung,
- eine Bestätigung eines anderweitig erhaltenen Resultats (z.B. kann eine Identifizierung bestätigt werden).

Gemäß weiteren Ausführungsbeispielen umfasst Managementsystem weiter eine Auswerteeinheit oder ist ausgebildet, um auf eine externe Auswerteeinheit im Fahrzeug oder auf dem mobilen Gerät oder auf einen externen Server (z.B. Cloud-basiert) zuzugreifen, um beispielsweise nutzerbezogene Daten zu aggregieren und auszuwerten. Diese Auswertung kann beispielsweise im Hinblick auf den Zustand des Nutzers erfolgen (z.B. Gesundheits- oder Fitnesszustand). Das Kommunikationsmodul kann dabei insbesondere ausgebildet sein, um Daten an die externe Auswerteeinheit über ein gesichertes Gateway zu übertragen.

Gemäß weiteren Ausführungsbeispielen kann das fahrzeugbezogene Modul fest mit dem Fahrzeug verbunden werden und kann insbesondere Teil einer Steuereinheit sein. Die zumindest eine Fahrzeugkomponente kann eine oder mehr der folgenden Komponenten umfassen oder ein Teil davon sein:
- ein Türöffner,
- eine Zündung,
- ein Bilddarstellungseinrichtung (z.B. ein Bildschirm, Projektionsmodul (head-up Display), eine "Augmented Reality" Scheibe beispielsweise an der Windschutzscheibe),
- eine Beschleunigungsregelung des Fahrzeugs,
- ein Bremssystem des Fahrzeugs
- eine Kommunikations-, Navigations- oder Entertainmentsystem,
- ein Sitzeinstellungsmodul,
- ein Lenkradeinstellungsmodul,
- ein Spiegeleinstellungsmodul,
- ein Temperaturregelungsmodul,
- eine Massageeinheit.

Gemäß weiteren Ausführungsbeispielen ist das fahrzeugbezogene Modul ausgebildet, dem Fahrzeug ein Authentifizierungssignal bereitzustellen, um einen Zugriff auf die Fahrzeugkomponente oder auf das gesamte Fahrzeug nur zu ermöglichen, wenn der Nutzer identifiziert wurde oder wenn der Nutzer sich auf einen zugeordneten Platz befindet.

Erfindungsgemäß speichert das fahrzeugbezogene Modul nutzerspezifische Daten nur während einer Kommunikation oder einer Verknüpfung mit dem personenbezogenen Modul. Nach einer vorbestimmten Zeitdauer nach Beendigung der Kommunikation werden diese Daten gelöscht.

Gemäß weiteren Ausführungsbeispielen ist das fahrzeugbezogene Modul weiter ausgebildet, um mit einer Vielzahl von personenbezogenen Modulen zu kommunizieren und Funktionen des Fahrzeugs zugänglich zu machen. Die Kommunikation kann gleichzeitig erfolgen (z.B. mehrere Insassen in einem Fahrzeug haben entsprechende personenbezogene Module) oder auch nacheinander - beispielsweise, wenn sich mehrere Fahrer ein Fahrzeug teilen (z.B. Mietwagen, Car-Sharing etc.).

Ausführungsbeispiele beziehen sich auch auf ein Fahrzeug mit einem Managementsystem wie es zuvor definiert wurde.

Gemäß weiteren Ausführungsbeispielen umfasst das Fahrzeug zumindest einen der folgenden Sensoren als Datenquelle(n) für das Managementsystem:
- eine oder mehrere Kameras,
- einen optischen Sensor (z.B. Lasersensor oder optisches tracking-Gerät),
- einen photoelektrischen Sensor,
- zumindest einen Drucksensor in einem Fahrzeugsitz,
- ein Thermometer,
- zumindest ein Bewegungserfassungssensor,
- ein Ultraschallsensor,
- ein Vibrationssensor,
- ein Infrarotsensor,
- ein Mikrofon,
- eine Einrichtung zur Messung von Bio-Daten, insbesondere eines EEG/EKGs,
- ein Kraftmesssensor (z. B. an einem Pedal für Bremse, Gas etc.),
- einen Beschleunigungssensor,
- einen Feuchtigkeitsmesser,
- einen Leitfähigkeitsmesseinrichtung.

Ausführungsbeispiele beziehen sich auch auf ein System zur Identifikation und zum Bio-Monitoring von zumindest einem Nutzer eines Fahrzeugs. Das System umfasst: ein personenbezogenes Modul, das ausgebildet ist, um auf persönliche Daten des Nutzers zuzugreifen und dadurch den Nutzer zu identifizieren, und ein Managementsystem wie es zuvor definiert wurde.

Gemäß weiteren Ausführungsbeispielen ist das personenbezogene Modul ein tragbares/mobiles Gerät oder ein Teil davon. Beispielsweise kann das personenbezogene Modul auf einem mobilen Gerät, z.B. in Form eine App, ausgebildet sein. Das mobile Gerät kann ein Smartphone, ein Tablet, ein Fitnessarmband, eine Smartwatch etc. sein. Die persönlichen Daten können zumindest eines aus dem Folgenden umfassen:
- ein Passwort,
- ein Fingerabdruck,
- ein Bild,
- einen Augen-Iris-Scan,
- eine charakteristische Herzaktivität,
- ein Puls,
- ein Bestandteil oder eine Eigenschaft des Blutes,
- Bewegungsprofil,
- Fahrverhaltzen,
- Verhalten beim Sitzen,
- Verhalten bei Bewegungen (z.B. Laufen),
- Nutzungsverhalten von tragbaren elektronischen Geräten (Smart-Phones, Tablets, etc.) und Social Media Konten,
- eine Temperatur,
- eine Ortsinformation.

Gemäß weiteren Ausführungsbeispielen ist das personenbezogene Modul ausgebildet, um gesundheitsspezifische Daten des Nutzers zu erfassen und Informationen über potentielle Gesundheitsverschlechterungen, die die Fahrtüchtigkeit beeinflussen können, als Daten zum Austausch bereitzustellen.

Gemäß weiteren Ausführungsbeispielen ist das Kommunikationsmodul ausgebildet, um zumindest eines der folgenden Protokolle zu nutzen: Bluetooth, ANT+, NFC, WiFi oder ein anderes gängiges Protokoll. Es versteht sich, dass die Erfindung nicht zwingenderwies ein bestimmtes Protokoll eingeschränkt sein soll - es kann jeder geeignet Standard genutzt werden. Das Kommunikationsmodul kann weiter ausgebildet sein, um die Kommunikation zu überwachen und ein nicht-autorisiertes Eindringen eines Dritten zu erkennen und/oder zu verhindern.

Ausführungsbeispiele beziehen sich auch auf ein Verfahren zur Identifikation und zum Bio-Monitoring in Fahrzeugen. Das Verfahren umfasst die Schritte:
- Erfassen, durch ein personenbezogenes Modul, von persönlichen Daten eines Nutzers;
- Identifizieren des Nutzers basierend auf den erfassten persönlichen Daten;
- Steuern, durch ein fahrzeugbezogenes Modul, von zumindest einer Fahrzeugkomponente;
- Austauschen von Daten zwischen dem personenbezogenen Modul und dem fahrzeugbezogenen Modul, unabhängig davon, ob der Nutzer im Fahrzeug ist oder außerhalb; und
- Durchführen von Änderungen, durch das fahrzeugbezogene Modul, an der zumindest einen Fahrzeugkomponente basierend auf den ausgetauschten Daten.

Gemäß weiterer Ausführungsbeispiele sind alle zuvor beschriebene Funktionen der genannten Systeme als weitere optionale Schritte in dem Verfahren umgesetzt. Auch die Reihenfolge der Schritte kann beliebig gewählt werden.

Dieses Verfahren oder zumindest Teile davon kann/können ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einem Prozessor läuft. Daher bezieht sich die vorliegende Erfindung ebenfalls auf Computerprogrammprodukt mit darauf gespeichertem Software-Code (Softwareanweisungen), der ausgebildet ist, um eines der zuvor beschriebenen Verfahren auszuführen, wenn der Software-Code durch eine Verarbeitungseinheit ausgeführt wird. Die Verarbeitungseinheit kann jede Form von Computer oder Steuereinheit sein, die einen entsprechenden Mikroprozessor aufweist, der einen Software-Code ausführen kann.

Insbesondere kann gemäß Ausführungsbeispielen jedes der genannten Module in Software implementiert sein oder eine entsprechend programmierte Steuer- oder Verarbeitungseinheit im Fahrzeug aufweisen kann.

Gemäß weiteren Ausführungsbeispielen erfolgt insbesondere eine Cloud-Anbindung, es werden Downloads aus App-Stores ermöglicht, die Software in den Fahrzeugen kann wöchentlich/täglich erneuert werden (Updates).

Im Vergleich zu konventionellen Systemen basieren Vorteile von Ausführungsbeispielen somit auf ein Biodaten-Erfassungsgerät oder ein persönlichen Fitness-System (tragbares Gerät), das gleichzeitig zur zuverlässigen Identifizierung bzw. Authentifizierung im Fahrzeugbereich genutzt wird. Für eine Anpassung des Fahrzeugs auf den individuellen Bedarf des Nutzers wird ein Informationsaustausch zwischen Fahrzeug und dem persönlichen Fitness-System des Nutzers außerhalb des Fahrzeugs genutzt, wobei kein vollständiger Austausch von Roh-Daten erforderlich ist, sondern nur aufbereitete Informationen und diese auch nur in dem dafür notwendigen Umfang zwischen dem persönlichen Fitness-System des Nutzers und dem Bio-Management-System im Auto vorteilhafterweise ausgetauscht werden.

Im Gegensatz zu konventionellen Systemen kann das Verhaltens- oder Bewegungsmuster beim Sitzen erfasst und das Auto (Fahrzeug) entsprechend bedarfsgerecht anpasst werden. Daher beziehen sich die folgenden Ausführungsbeispiele weniger auf ein Fitness-System, sondern auf ein Bio-Managementsystem oder einfach Managementsystem im Fahrzeug. So können konventionelle Fitness-Tracker zwar den normalen Tagesablauf ausreichend gut analysieren und Schlaf-Tracker können dies für die Zeit des Schlafes tun. Im Gegensatz zu Ausführungsbeispielen bieten diese mobilen Geräte jedoch keine technisch leistungsfähige Lösung für das Sitzen in Fahrzeugen.

Die gemäß Ausführungsbeispielen im Auto ermittelten Daten sind auch für Anwendungen in Fitness- und Schlaftracker wichtig und können die Datenbasis von Fitnesssystemen außerhalb des Fahrzeugs wesentlich erweitern. Durch die Integration der Daten des Managementsystems im Auto in den Fitness-Systemen außerhalb des Fahrzeugs ergibt sich ein vollständiges Bild über den Tagesablauf und die Situation der jeweiligen Person.

Obwohl konventionelle Systeme Informationen über den Ermüdungszustand in den Beinen und Rücken mit einem Sensorsystem erfassen können, sind dort die Informationen manuell für den jeweiligen Sitz in eine Eingabeeinheit einzutragen. Sollte die Person aber beim nächsten Mal an einem anderen Platz sitzen, sind neue Eintragungen erforderlich oder zumindest ist die Zuordnung der Person zu dem neuen Sitz zu ändern. Die genannten Ausführungsbeispiele ermöglichen es stattdessen, Ermüdungszustände des Körpers permanent zu berücksichtigen. Nach einem Marathonlauf ist eine andere Sitzstellung sinnvoll als nach einem Tag mit sitzender Tätigkeit.

Schließlich erlauben die Ausführungsbeispiele, neue Mobilitätsdienstleistungen wie Mitfahrtplattformen und Car-Sharing etc. zu nutzen, ohne dass persönliche Daten im großen Umfang weitergegeben werden müssten. Als Folge können Menschen sehr viele unterschiedliche Autos fahren und Autos öfter wechseln oder in verschiedenen Fahrzeugen sitzen und brauchen dabei weder auf den gewohnten Komfort zu verzichten, noch auf den Schutz der persönlichen Daten.

### KURZBESCHREIBUNG DER FIGUREN

Die Ausführungsbeispiele der vorliegenden Erfindung werden besser verstanden anhand der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1A: zeigt ein Managementsystem zur Identifikation und zum Bio-Monitoring in Fahrzeugen gemäß einem Ausführungsbeispiel der vorliegenden Erfindung.
- Fig. 1B: zeigt ein Flussdiagramm eines Verfahrens zur Identifikation und zum Bio-Monitoring gemäß einem weiteren Ausführungsbeispiel.
- Fig. 2: zeigt den Grundaufbau des fahrzeugbezogenen Moduls gemäß einem Ausführungsbeispiel.
- Fig. 3: veranschaulicht einen Prozess der Datenerfassung und Datenauswertung des fahrzeugbezogenen Moduls gemäß einem Ausführungsbeispiel.
- Fig. 4: veranschaulicht die Nutzung von tragbaren Geräten als Identifikationssystem für das personenbezogene Modul gemäß einem Ausführungsbeispiel.
- Fig. 5: zeigt weitere Details der Kombination eines fahrzeugbezogenen Moduls mit einem personenbezogenen Modul gemäß Ausführungsbeispielen.
- Fig. 6: zeigt ein weiteres Ausführungsbeispiel für ein mobiles Gerät, das gemäß Ausführungsbeispielen ein tragbares Personal-Fitnesssystem ist.
- Fig. 7A, 7B: veranschaulichen weitere Ausführungsbeispiele, bei dem ein Sensor-System an einer Bekleidung des Nutzers vorhanden ist.
- Fig. 8: zeigt ein Ausführungsbeispiel für ein persönliches, tragbares Identifikationssystem.

### DETAILLIERTE BESCHREIBUNG

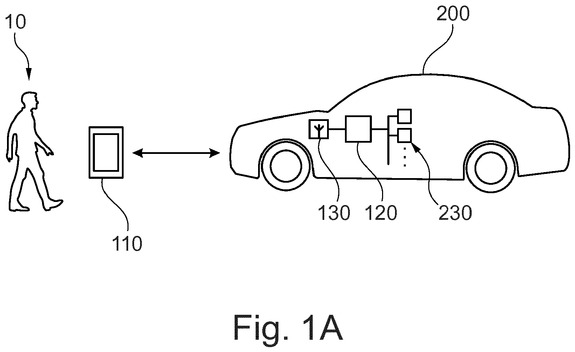

**Fig. 1A** zeigt ein Managementsystem zur Identifikation und zum Bio-Monitoring in Fahrzeugen 200. Das Bio-Monitoring bezieht sich auf einen Nutzer 10 mit einem personenbezogenes Modul 110. Das Managementsystem umfasst ein fahrzeugbezogenes Modul 120 und ein Kommunikationsmodul 130. Das personenbezogene Modul 110 ist ausgebildet, um auf persönliche Daten eines Nutzers 10 zuzugreifen und dadurch den Nutzer 10 zu identifizieren. Das fahrzeugbezogene Modul 120 ist ausgebildet, um auf zumindest eine Fahrzeugkomponente 230 zuzugreifen. Das Kommunikationsmodul 130 ist ausgebildet, um einen Austausch von Daten zwischen dem personenbezogenen Modul 110 und dem fahrzeugbezogenen Modul 120 zu ermöglichen, und zwar auch wenn sich das personenbezogene Modul 110 außerhalb des Fahrzeugs 200 befindet. Das fahrzeugbezogene Modul 120 ist weiter ausgebildet, um basierend auf den ausgetauschten Daten zumindest eine Änderung an der zumindest einen Fahrzeugkomponente 230 vorzunehmen oder zu erlauben bzw. deren Funktionen zu ermöglichen oder zu blockieren.

Das Fahrzeug 200 soll nicht nur ein Auto oder LKW umfassen, sondern jedes Fahrzeug, das zum Personentransport geeignet ist, d.h. jede Form von Land-, Luft- oder Seefahrzeug umfassen.

Das fahrzeugbezogene Modul 120 kann beispielsweise fest mit dem Fahrzeug 200 verbunden sein bzw. als Teil einer Steuereinheit ausgebildet sein. Die Fahrzeugkomponente 230 kann nahezu jede Komponente des Fahrzeugs 200 sein, die durch das fahrzeugbezogene Modul 120 gesteuert werden kann. Beispiele umfassen: ein Türöffner, eine Zündung, ein Bilddarstellungseinrichtung (z.B. ein Bildschirm, Projektionsmodul oder "Augmented Reality" Scheibe), eine Beschleunigungsregelung des Fahrzeugs, ein Bremssystem des Fahrzeugs, eine Kommunikations-, Navigations- oder Entertainmentsystem, ein Sitzeinstellungsmodul, ein Lenkradeinstellungsmodul, ein Spiegeleinstellungsmodul, ein Temperaturregelungsmodul (z.B. im Sitz oder Klimaanlage), eine Massageeinheit oder Teile davon.

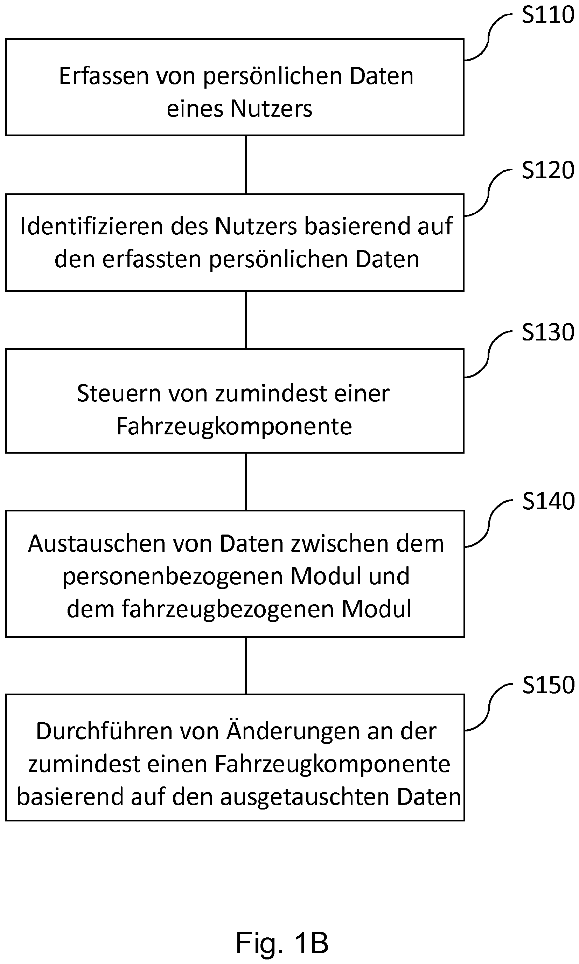

**Fig. 1B** zeigt ein Flussdiagramm für ein Verfahren zur Identifikation und zum Bio-Monitoring in Fahrzeugen gemäß einem weiteren Ausführungsbeispiel. Das Verfahren umfasst:
- Erfassen Sno, durch ein personenbezogenes Modul 110, von persönlichen Daten eines Nutzers 10;
- Identifizieren S120 des Nutzers 10 basierend auf den erfassten persönlichen Daten;
- Steuern S130, durch ein fahrzeugbezogenes Modul 120, von zumindest einer Fahrzeugkomponente 230;
- Austauschen S140 von Daten zwischen dem personenbezogenen Modul 110 und dem fahrzeugbezogenen Modul 120, unabhängig davon, ob der Nutzer 10 im Fahrzeug 200 ist oder außerhalb; und
- Durchführen S150 von Änderungen, durch das fahrzeugbezogene Modul 120, an der zumindest einen Fahrzeugkomponente 230 basierend auf den ausgetauschten Daten.

Es versteht sich, dass alle im Zusammenhang mit dem Managementsystem aus der Fig. 1A beschriebenen Funktionen als weitere optionale Schritte auch in dem Verfahren umgesetzt sein können.

Das Verfahren kann ebenfalls Computer-implementiert sein, d.h. es kann durch Anweisungen umgesetzt sein, die auf einem Speichermedium gespeichert sind und in der Lage sind, die Schritte des Verfahrens auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Steuereinheit (mit einem Prozessor) gespeichert sein können, die, wenn sie gelesen und durch die Steuereinheit ausgeführt werden, die Steuereinheit dazu veranlassen, Funktionen, Funktionalitäten und Operationen auszuführen, die zum Ausführen eines Verfahrens gemäß der vorliegenden Erfindung notwendig sind.

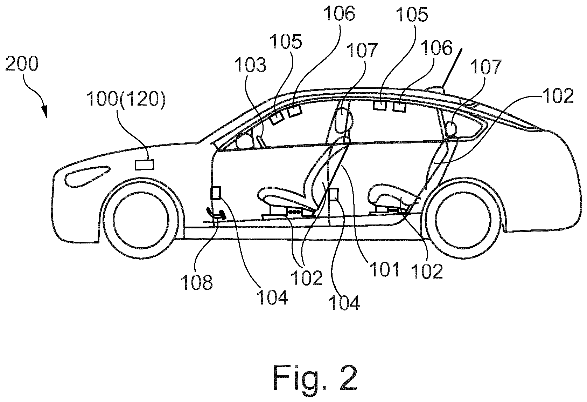

**Fig. 2** zeigt den Grundaufbau des fahrzeugbezogenen Moduls 120, das als ein Bio-Management-System in dem Fahrzeug 200 vorhanden ist und das beispielhaft in einem der Bildschirm-Einheiten des Entertainment- und Navigationssystem als Anwendung mit Ein- und Ausgabeeinheit im Fond integriert sein kann. Es sind beispielhaft verschiedene Sensoren und Instrumente bzw. Einrichtungsgegenstände, die auf die individuelle Situation der jeweiligen Person 10 angepasst werden können, dargestellt.

So umfasst das Fahrzeug 200 zumindest einen Autositz 101, der bezüglich vieler Bereiche wie Höhe, Breite, Länge, Neigungen, Sitzpolsterhärte, Auspolsterungen und Stützen, Temperator, Massagefunktion etc. einstellbar ist. Der Sitz 101 kann verschiedene Sensoren 102 umfassen, wie z.B. einen oder mehr der Folgenden: Druck-, Temperatur- und Pulssensoren, Sensoren zur Feuchtigkeits- und Leitfähigkeitsmessung (Schwitzen, Stress etc.). Das Lenkrad 103 des Fahrzeuges 200 kann verstellbar sein und ebenso verschiedene Sensoren wie in den Sitzen, sowie Sensoren zur Analyse der Lenktätigkeit umfassen. Das Fahrzeug 200 umfasst weiter ein Pedal 108 (z.B. Bremspedal, Gaspedal) mit Sensoren zur Erfassung des Druckes, Verhaltens und der Fussstellung.

Außerdem können verschiedene Kameras oder Infrarot-, Ultraschall-, Bewegungs-Tracker z.B. im Fußraum (Sensor 104) oder im Kopfbereich (Sensor 105) oder oberhalb des Kopfes vorhanden sein, um Bewegungen, Augenbewegungen, Oberkörperbewegungen zu erfassen. Außerdem können Mikrophon(e) 106 vorhanden sein. Außerdem können Sensoren 107 in Kopflehnen vorhanden sein, die z.B. ein sogenanntes EEG zur Messung der Hirnströme aufweisen können. Somit kann die Hirnaktivität erfasst werden. In Kombination mit anderen erfassten Daten - insbesondere Herzratenvariabilität, EKG, Verhalten beim Sitzen - können hieraus wertvolle Information berechnet und abgeleitet werden. Die Sensoren 107 können aber auch ausgebildet sein, um einen Abstand des Kopfes zur Nackenstütze zu messen. Hierzu können zum Beispiel sogenannte Ultraschallsensoren genutzt werden (die ebenfalls Ultraschall senden). Dadurch kann die Haltung des Kopfes ermittelt werden. Besonders vorteilhaft ist dies bei plötzlich auftretenden gesundheitlichen Problemen oder einem Einschlafen des Fahrers bzw. einem sogenannten Absacken des Kopfes.

Es ist beispielhaft ein Auto 200 dargestellt. Es kann sich aber auch um andere Fahrzeuge oder Fortbewegungsmittel wie Boote oder Fluggeräte handeln. Im Folgenden wird vereinfachend von Autos als Fahrzeugen gesprochen. Wichtig ist, dass im Fahrzeug 200 nicht nur Sensoren 102, 103, 104, ... Daten erfassen, sondern dass das fahrzeugbezogene Modul 120 ausgebildet ist, um basierend darauf Fahrzeugkomponenten 230 wie Sitze 101, Lenkrad 103, Spiegel etc. anzupassen.

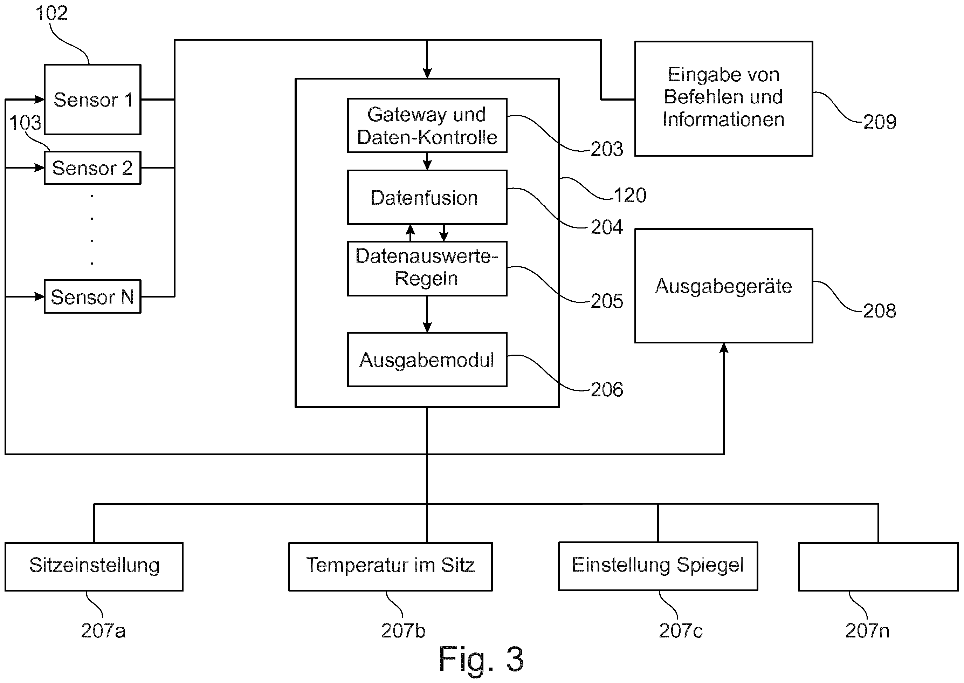

**Fig. 3** veranschaulicht diesen Prozess weiter. Die Daten der verschiedenen Sensoren 102, 103, ... können vom fahrzeugbezogenen Modul 120 abgerufen werden und gelangen über ein Gateway und Modul zur Datenkontrolle 203 in das fahrzeugbezogenen Modul 120. Das Gateway/Modul zur Datenkontrolle 203 kann auch eine Technologie zur Absicherung von ungewollten Zugriffen (und diese unterbinden) oder Falschdaten enthalten und kann in einer spezifischen Ausgestaltung auch ein sogenanntes "Ethernet Switch" aufweisen (z.B. gemäß der IEEE Standards wie zum Beispiel 100Base-T1). Es kann aber auch physisch in diesem Ethernet Switch als ein Teil-Modul implementiert sein.

Beispielsweise ist das Auswerten der Daten für den Autositz 101 bereits sehr wichtig und kann direkt im Autositz 101 stattfinden. Hierfür kann im Autositz 101 eine entsprechende Verarbeitungseinheit vorgesehen sein, um eine Vorauswertung der Daten durchzuführen. Es ist ebenfalls möglich, dass das System 120 sich im Autositz 101 befindet. Dies ist insbesondere dann vorteilhaft, wenn nur die Daten der Autositze 101 für das Bio-Monitoring einbezogen werden. In vielen Fällen ist es aber sinnvoll, Daten der verschiedenen Sensoren 102, 103, ... im Auto 200 in einem Datenpool zusammenzubringen und durch eine gemeinsame Auswertung neue Erkenntnisse und Informationen zu gewinnen. Hierfür können die aus dem Bereich künstliche Intelligenz bekannten und in dieser Erfindung weiter unten dargestellten Daten-Auswerte- Algorithmen und Daten-Algorithmen Lerninstrumente eingesetzt werden.

Zum Beispiel kann das fahrzeugbezogene Modul 120 Daten von Drucksensoren 102 im Autositz 101 und von Kameras 104, 105 erfassen und auswerten. Bei der Auswertung kann insbesondere das Verhalten im Sitz und die Belastung auf Skelett und Muskulatur ermittelt werden. Außerdem können die Drucksensoren 102 durch weitere Sensoren ergänzt werden, wobei insbesondere TemperaturSensoren
oder Kameras zum Filmen des Verhaltens des Nutzers zum Einsatz kommen können. Durch die damit erhaltene kombinierte Auswertung wird die Messgenauigkeit deutlich gesteigert. Durch einen Abgleich und Verschmelzen der Daten können diese außerdem überprüft und ergänzt werden. Die Ursachen für Abweichungen oder Veränderungen ermittelt werden.

In der Regel wird auch die Zeit bis zum Vorliegen von exakten Daten verringert, da viele Sensoren mit Filter-Mechanismen arbeiten und häufig auftretende Messfehler über die Bildung von Zeitreihen eliminiert werden müssen. Durch die Kombination verschiedener Sensoren und Daten-Quellen können Ausführungsbeispiele einen Zeitreihenvergleich vermeiden oder verkürzen. Dadurch ist es möglich. Informationen in Echtzeit oder nahezu in Echtzeit ("Near-Real-Time") zu gewinnen und zu verarbeiten.

Um diesen Zweck zu erreichen, kann das fahrzeugbezogene Modul 120 gemäß weiteren Ausführungsbeispielen ein Modul zur Datenfusionierung und - auswertung 204 aufweisen. Zur Datenauswertung werden Datenalgorithmen und Auswerte-Regeln 205 eingesetzt, die in einen entsprechenden Speicher abgelegt sein können. Basierend auf der Datenauswertung kann durch ein Ausgabemodul 206 eine entsprechende Information zur Anpassung der Verhaltensweise an den Nutzer ausgegeben werden. Die Ausgabe kann auf einem Bildschirm oder einem anderen Ausgabemedium 208 wie Lautsprecher, Head-up-Display oder Augmented Reality-Windschutzscheibe erfolgen. Es können aber auch verschiedene Einstellungen im Auto 200 wie z.B. eine Sitzneigung/Sitzeinstellung 207a, eine Temperatur des Sitzes 207b, Spiegeleinstellung 207c etc. verändert werden.

Optional erlaubt das fahrzeugbezogene Modul 120 auch Eingaben vom Nutzer über ein entsprechendes Eingabemodul 209. Darüber kann der Nutzer zum Beispiel Bestätigungen geben oder auch vorzunehmende Änderungen annullieren.

Die eingesetzten Datenalgorithmen und Auswerte-Regeln 205 werden aber im Rahmen der Datenauswertung 204 fortlaufend weiterentwickelt, wobei die dem Fachmann aus dem Bereich Maschinen-Lernen und künstlichen Intelligenz gebräuchlichen Methoden und Instrumente eingesetzt werden können.

Gemäß weiteren Ausführungsbeispielen schützt das fahrzeugbezogene Modul 120 die Daten, Informationen und Befehle gegen ungewollte Manipulation. Eine Bedrohung könnte beispielsweise sein, dass durch oder über einen oder mehrere Sensoren während der Fahrt der Sitz - insbesondere des Fahrers - verstellt und der Fahrer dabei abgelenkt wird, was ein Sicherheitsrisiko darstellt. Eine zentrale Datenkontrolle in dem fahrzeugbezogene Modul 120 spart Energie und ist schneller.

Gemäß weiteren Ausführungsbeispielen kann das fahrzeugbezogene Modul 120 daher Sicherungsmechanismen in dem Gateway/Modul zur Datenkontrolle 203 aufweisen, die eine oder mehrere der folgenden Maßnahmen umfassen: Verschlüsselung, Validierung Identifikations-Code-Austausch zwischen Sensoren etc.

Gemäß weiteren Ausführungsbeispielen wird die Sicherheit weiter dadurch gesteigert, dass neben den bekannten Sicherheitstechnologien spezifische Sicherheitsmechanismen in den Auswerte-Regeln 205 integriert sind. Beispiele hierfür sind:
1. Die Körpergröße des Nutzers 10 ist im System hinterlegt und aus diesen werden bestimmte bio-mechanische Gegebenheiten wie Beinlänge, Armlänge und entsprechende Hebel bei Ellbogen und Knie berechnet. Hierbei handelt es sich i.d.R. um eine Näherung, die aber genügt, um die im folgenden erforderlichen Bandbreiten zu definieren.
2. Veränderung der Sitzposition dürfen nur in festgelegten Bandbreiten erfolgen. Die Bandbreiten werden so definiert, dass zum Beispiel der Fahrer 10 immer ein gutes Sichtfeld nach vorne und zur Seite hat und die Betätigungselemente (Bremse, Gaspedal, Kupplung) immer in Reichweite bleiben.
3. Anpassungen bei Sitz, Lenkrad, Spiegel etc. erfolgen sehr langsam und werden aufeinander abgestimmt (Veränderung des Sitzes und darauf angepasstes Verändern der Innen- und Außenspiegel, des Lenkrades bzw. der Steuereinheit, der Projektionen in die Scheiben bzw. die Ausrichtung der Bildschirme im Fahrzeug etc.).

Gemäß weiteren Ausführungsbeispielen ist das fahrzeugbezogene Modul 120 in der Lage, diese Sicherheitsregeln auf das Land anzupassen, in dem sich das Fahrzeug befindet. Eine Möglichkeit hierfür wäre, dass ein vorhandenes GPS System, das Land erkennt und an das fahrzeugbezogene Modul 120 meldet und dort entsprechend die geltenden Sicherheitsregeln einsetzt. Bei Bedarf kann auch die Hardware und/oder die Sensoren im Fahrzeug 200 entsprechend angepasst werden. Auch hier gelten die oben genannten Sicherheitsvorkehrungen. Insbesondere kann der Fahrer darüber über das Ausgabemodul 206 informiert werden.

Vorteile von Ausführungsbeispielen basieren aber auf der Kombination des beschriebenen fahrzeugbezogenen Moduls 120 im Fahrzeug mit dem personenbezogenem Modul 110 (z.B. ein persönliches Fitness-Monitoring System des Nutzers). Unabhängig vom fahrzeugbezogenen Modul 120 kann das personenbezogene Modul 110 auch als Identifikationssystem für andere Anwendungen im Auto genutzt werden.

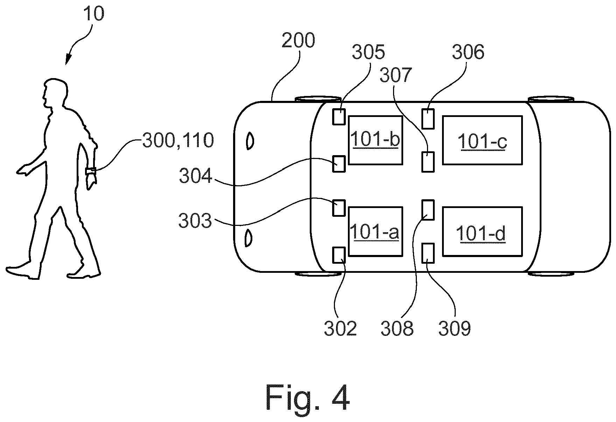

**Fig. 4** veranschaulicht die Nutzung von tragbaren Geräten 300 wie Fitness-Tracker oder Smart-Watches als Identifikationssystem für die Systeme des Fahrzeugs 200 und insbesondere für das fahrzeugbezogene Modul 120. Das tragbare Gerät 300 kann das personenbezogene Modul 110 aufweisen (z.B. in Software implementiert sein), wobei das personenbezogene Modul 110 das Identifikationssystem umfassen kann.

Als tragbare elektronische Geräte 300 können beispielsweise folgende Geräte genutzt werden: Smart Phone, Smart Watch, Musik-Player, Ohr-Hörer. Auf diesen befinden sich Informationen über den Besitzer bzw. Träger (Nutzer 10). Um abzusichern, dass es sich tatsächlich um den registrierten Eigentümer handelt, können die dem Fachmann bekannten Absicherungsverfahren über Eingabe von Sicherheitscodes, Fingerabdruck-Scanner, Augen-Iris-Scan etc. eingesetzt werden. Sobald das tragbare Gerät 300 mit dem Besitzer in das Fahrzeug 200 einsteigt oder in dessen Nähe kommt, kann sich das personenbezogene Modul 110 in dem Gerät 300 automatisch mit fahrzeugbezogenen Modul 120 verbinden, wobei wiederum verschiedene Paarungs- und Freigabeprozesse möglich sind.

Gemäß vorteilhaften Ausführungsbeispielen erfolgt eine Zuordnung zwischen dem Gerät 300 und einem spezifischen Platz 101 (Fahrersitz 101-a, Beifahrer 101-b, Hinten links 101-d, Hinten mittig 101-c etc.). Dies kann durch verschiedene Verfahren erreicht werden. Ein einfaches Beispiel wäre eine Ortung der räumlichen Nähe durch einen NFC-Chip, etc. Es können aber auch für Geräte wie Smart-Phones, In-Ear Plugs, oder smarte Brillen bestimmte Ablage-Flächen zugewiesen werden, deren Aktivierung/Entnahmen dann detektiert werden kann.

In der Fig. 4 ist ein Beispiel eines solchen Zuordnungsverfahrens gezeigt. Setzt sich der Nutzer 10 mit dem Gerät 300 in den Fahrersitz 101-a, dann kann er das Gerät 300 zum Beispiel kurz an ein Zuordnungssensorsystem 302 halten. Dabei kann es sich zum Beispiel um ein NFC Sensorsystem handeln, wie es in vielen Fitness-Systemen wie Smart-Watch, Smart Phone vorhanden ist. Für Personen, welche die Uhr rechts tragen, ist eventuell noch ein weiteres Sensorsystem 303 auf der rechten Seite vorhanden, damit kann das Gerät 300 sehr einfach an den Sensor 302, 303 gehalten werden. Gemäß Ausführungsbeispielen können weitere Zuordnungssensoren 304, 305 für den Beifahrer neben dem Autositz 101b vorhanden sein. Gleiches kann für weitere Passagiere auf den hinteren Sitzen 101-c, 101-d mittels vorhandener Zuordnungssensoren 306, 307, 308, 309 erreicht werden.

Ein Problem ergibt sich wegen der räumlichen Nähe der mittigen Zuordnungssensoren 303, 304 (bzw. 308, 307). Auf dem personenbezogenen Modul 110 kann jedoch hinterlegt sein (oder die Uhr kann es mittels Sensoren wie Gyroskope erfassen; wenn die Uhr links getragen wird, unterscheidet sich die Lage/Ausrichtung der Uhr beim Trageverhalten von dem bei einem Tragen an der rechten Hand; es kann auch erkannt werden, ob die Uhr auf der Unterseite des Armes getragen wird etc.), ob es sich bei dem Nutzer 10 um eine Person handelt, die rechts oder links die Uhr trägt. Das System würde bei einer Person, die rechts die Uhr trägt, erkennen, dass sie in 101-a sitzt, wenn der Sensor 303 und/oder der Sensor 304 ein Signal generiert. Eine Person, die links die Uhr trägt, würde sie automatisch 101-b zuordnen, wenn die mittigen Zuordnungssensoren 303, 304 ein Signal generieren. Gleiche trifft dann für 307 und 308 zu.

Gemäß weiteren Ausführungsbeispielen erfolgt eine automatische Erkennung, dass die Person 10 auf einen spezifischen Platz sitzt. So können beispielsweise die Sensoren 102 im Autositz oder an anderen Teilen des Autos (Sensor 103 am Lenkrad oder Sensor 108 an einem Pedal) erkennen, welche Person dort sitzt. Dies kann beispielsweise mittels eines individuellen Musters geschehen, das zumindest eines der folgenden Merkmale berücksichtigt: Verhalten, Gegebenheiten (z.B. Gewicht, Größe), Bio-Daten wie Muster des Herzschlags bei bestimmten Fahrtgeschwindigkeiten oder bestimmten Fahrtsituationen. Als weitere Gesundheitsdaten können zum Beispiel Herzfrequenz, Herzvariabilität, EKG, Stressbelastung, Atemfrequenz, Hirnströme (EEG), Blutdruck, Temperatur und deren Schwankung, Blutzucker etc. genutzt werden.

Beispielsweise kann gemäß Ausführungsbeispielen das Navigationssystem veranlasst werden, zu detektieren, ob viele Kreuzungen, Kurven etc. durchfahren werden. Da die Nutzer grundsätzlich unterschiedlich auf diese Situationen reagieren, kann dieses Muster zur Identifikation des Nutzers 10 genutzt werden. Beispielsweise geht bei einem Nutzertyp die Herzfrequenz bei Kreuzungen, Kurven etc. stark nach oben, bei einem anderen verursacht die gleiche Situation keine oder nur eine geringe Änderung der Herzfrequenzen. Weitere individuelle Verhaltensdaten, die bei Ausführungsbeispielen genutzt werden, können beispielsweise die Ermittlung umfassen, wie eine Person im Autositz 101 sitzt und wie sie sich darin verhält: wie oft wechselt sie die Position; belastet sie links/rechts oder vorne/hinten mehr; sitzt sie aufrecht oder gekrümmt. Die Kameras 104, 105 können dies leicht erkennen.

Einzelne Daten oder die Kombination der verschiedenen Daten stellen ein sehr individuelles Identifikationsmittel (ähnlich einem Fingerabdruck) dar. Auf diese Weise kann nicht nur ermittelt werden, in welchem Sitz der Nutzer 10 sitzt, sondern auch wer sich - aus einer vorgegebenen Personengruppe - im dem jeweiligen Sitz befindet. Steigen mehrere Personen in ein Fahrzeug ein (z.B. ein Ehepaar), kann das fahrzeugbezogene Modul 120 vom personenbezogenen Modul 110 Daten wie Gewicht, Körperbau (zum Beispiel auch ein 3-D-Scan des Körpers der Person) etc. auslesen und mit den erfassten Sitzdaten vergleichen und die jeweiligen Daten den Sitzen automatisch zuordnen. Als Check kann noch eine kurze Abfrage mit einer Darstellung der zugeordneten Daten an einem Ausgabegerät 208 (z.B. ein In-Board Bildschirm) des Fahrzeugs erfolgen, um sicherzustellen, dass die Zuordnung korrekt ist.

Ausführungsbeispiele können die Prognosequalität der Zuordnung durch zumindest eine der folgenden Maßnahmen verbessern:
Es können nicht nur die Gewichtsdaten des Nutzers vom personenbezogenen Modul 110 an das fahrzeugbezogene Modul 120 gesandt werden, sondern optional auch ein 3D-Scan des Körpers des Nutzers 10. Die Drucksensoren 102 im Autositz vergleichen dies mit den zugesandten Daten und bestätigen bei Übereinstimmung die Identität. Der 3D-Scan des Nutzers 10 kann durch eine 3D-Kameras aufgenommen werden, wie sie zunehmend für individualisierte Bekleidungsstücke in der Bekleidungsindustrie eingesetzt wird. Diese in vielen Fällen in stehender Haltung aufgenommenen 3D-Scans können über Algorithmen in sitzende 3D-Muster umgewandelt werden. Länge und Breite der Oberschenkel, Form der Gesäßmuskulatur liefern Basis-Daten. Aus den Daten des Oberkörpers können diese Basis-Daten noch verfeinert werden. Mit diesen Daten kann beispielsweise ermittelt werden, wie die Person sitzen wird (z.B. welches Druckprofil auf dem Sitz erzeugt wird). Somit können diese Daten zur Definition von Normalwerten genutzt werden, gegenüber die, das Monitoringsystem die Sensordaten abgleicht. Hier handelt es sich um Näherungen, die in Kombination eine verlässliche Aussage zulassen. Diese Verfahren sind aus dem Bereich der künstlichen Intelligenz bekannt.

Bei dem Abgleich des 3D-Scans mit dem Abdruck der Drucksensoren 102 im Autositz 101 kann eine Übereinstimmung berechnet werden. Die Prognose-Wahrscheinlichkeit ist durch dieses Verfahren höher, als wenn nur das Körpergewicht genutzt wird.

Eine noch höhere Wahrscheinlichkeit wird wie folgt erreicht: ein Nutzer setzt sich in einen Sitz 101 mit Drucksensoren 102. Daraufhin wird ein Profil der Druckverteilung erstellt. Da solche Profile der Druckverteilung beim Sitzen in einem Fahrzeugsitz 101 sich zwischen Personen stark unterscheiden, kann dieses Verfahren andere Verfahren zur Überprüfung der Identität entweder ergänzen oder ersetzen.

Eine weitere Möglichkeit die Zuordnung der Personen zu den verschiedenen Sitzen 101 zu erfassen, sind Kameras 104, 105 im Inneren des Autos, welche auf die Sitze gerichtet sind. Die Bilder der von den Kameras 104, 105 auf den jeweiligen Sitzpositionen erfassten Personen werden mit den Bildern verglichen, die auf dem mobilen Gerät 300 und den damit verbundenen Sicherheitsanwendungen hinterlegt sind. Gemäß Ausführungsbeispielen hat das personenbezogene Modul 110 Zugriff darauf.

Dieses automatische Erkennungssystem der Sitzzuordnung bei Fahrzeugen kann auch - unabhängig von Fitness-Systemen - für die Zuordnung bei anderen Anwendungszwecken verwendet werden, z.B. für Entertainment-Systeme wie "Augmented Reality" in den Fensterscheiben oder Virtual Reality auf Virtual Reality Brillen in selbstfahrenden Fahrzeugen. Bei einer automatischen Erfassung bzw. Zuordnung einer Person 10 auf einen Sitzplatz 101 kann gemäß Ausführungsbeispielen automatisch ein individualisiertes Programm für den jeweiligen Sitzplatz 101 gestartet werden. Person A, für den Mode-Shopping z.B. besonders wichtig ist, erhält beispielsweise während der Fahrt Informationen über die jeweils am Weg liegenden Mode-Geschäfte und deren Angebote. Eine sportbegeisterte Person B dagegen die Ergebnisse des Lieblingsvereins.

Gemäß weiteren Ausführungsbeispielen kann mittels eines schnellen Identifikationsverfahrens (z.B. Fingerabdruck-Scan oder Gesichtserkennung) eine erste Identifikation durchgeführt werden, um die Systeme schnell starten zu können. Dies kann zum Beispiel das Los-Fahren eines Autos sein, welches beispielsweise erst dann zugelassen wird, wenn eine schnelle Identifikation erfolgreich war. Hierbei kann zum Beispiel das fahrzeugbezogene Modul 120 ausgebildet sein, um die Zündung oder Türöffner erst dann freizuschalten, wenn die personenbezogene Module 110 eine Mitteilung über eine erfolgreiche (schnelle) Identifikation übermittelt hat.

Da auch als grundsätzlich sicher geltende Verfahren wie der Fingerabdruckscan nicht vor Täuschungsversuchen vollständig sicher sind, ermöglichen weitere Ausführungsbeispiele einen Abgleich des Verhaltens im Fahrzeug 200 (z.B. "wie sitzt der Nutzer im Fahrzeug", "wie oft verändert er die Sitzposition", "wie verändern sich seine Herz- und andere Bio-Daten in bestimmten Fahrsituationen"). Mit dem vorher aufgezeichneten Verhaltensmuster kann die Identität validiert werden. Verhaltensdaten können auch Nutzungsdaten von Medien im Fahrzeug 200 sein. Ein Nutzer 10 kann zum Beispiel sein Konto bei einer sozialen Medien-Plattform oder Cloud-Plattformen wie Spotify, etc. unter seinem Namen nutzen. Wenn ein nicht auf den Nutzer 10 registriertes Konto genutzt wird oder das Nutzungsverhalten vom bisherigen Verhalten stark abweicht, dann kann dies ein Hinweis auf Missbrauch sein.

Durch die kombinierte Auswertung dieser Verhaltensdaten kann eine Überprüfung bzw. Validierung der Identifikation erfolgen. Sollte dadurch festgestellt werden, dass mit einer bestimmten Wahrscheinlichkeit der identifizierte Nutzer nicht korrekt identifiziert wurde und ein Missbrauch mit einer bestimmten Wahrscheinlichkeit auftritt, können entsprechende Sicherungsmaßnahmen eingeleitet werden.

Diese Sicherungsmaßnahmen können gemäß Ausführungsbeispielen sehr unterschiedlich gestaltet werden. Eine zwingende erneute Identifikation mit einer anderen Methode kann eine Möglichkeit sein. Wurde zum Beispiel mit einem Fingerabdruck-Scan identifiziert, dann kann die Sprachaufforderung zur Eingabe oder zum Sprechen eines Passwortes oder Abfragen von Sicherungsfragen eine Option sein. Hier gibt es sehr viele Ausgestaltungsmöglichkeiten bis hin zum automatisierten Aufsuchen der nächsten Parkmöglichkeit und Stilllegen bzw. Absichern des Fahrzeugs.

Die Kombination von einem fahrzeugbezogenen Modul 120 und einem personenbezogenen Module 110 (z.B. persönlichen Fitnesssystemen) ermöglicht nicht nur eine Identifikation der Nutzer 10. Im Folgenden wird beschrieben, wie durch diese Kombination von persönlichen Fitnesssystemen und Bio-Management-Systemen im Fahrzeug die Daten- und Prognosequalität für eine sichere Identifikation erhöht wird.

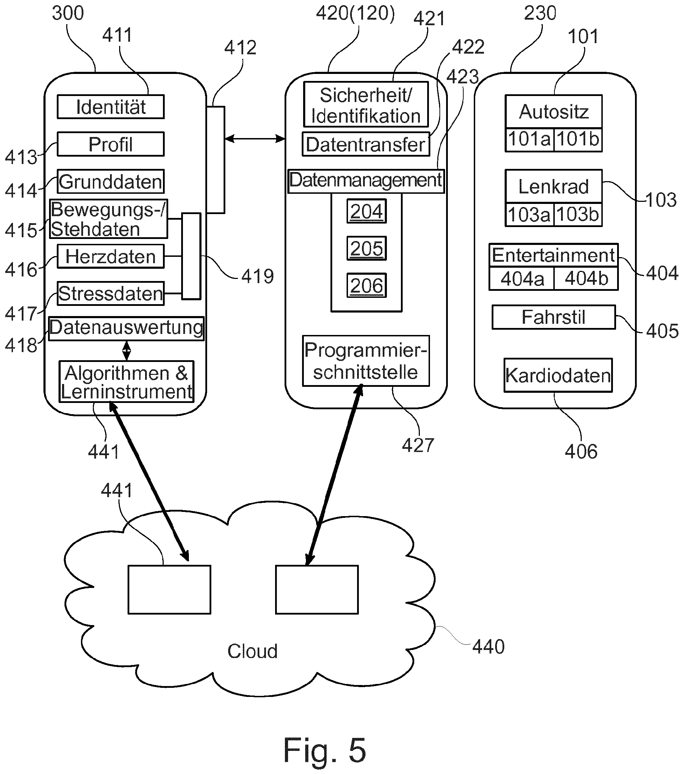

**Fig. 5** zeigt weitere Details des technischen Grundaufbaus der Kombination des fahrzeugbezogenen Moduls 120 und des mobilen Geräts 300 mit dem personenbezogenen Modul 110.

Das fahrzeugbezogene Modul 120 kann eine separate Prozessor-Einheit für das Bio-Management oder ein Teil des Fahrzeug-Entertainment, des Navigationssystems oder eines anderen Prozessorsystems im Fahrzeug sein. Erfindungsgemäß ist es als ein abgesichertes Gateway 420 ausgebildet und die folgenden funktionalen Module können umfassen: "Identitäts- und Sicherheitsfunktion" 421, "Daten- und Informationstransfer zu Fahrzeug-externen Systemen" 422, "Fahrzeug-internes Datenmanagement" 423. Die Ausbildung als Gateway ist aber nur optional. Alle im Folgenden genannten Funktionen können auch Funktionen des fahrzeugbezogenen Moduls 120 sein, ohne dass es als ein Gateway ausgebildet ist.

Das Modul für das Datenmanagement 423 enthält wie in Fig. 3 dargestellt Module zu "Datenfusionierung" 204, "Datenalgorithmen Auswerte-Regeln" 205, und "Ausgabe von Informationen an Nutzer und Anpassung der Fahrzeugeinstellungen" 206.

Das tragbare Gerät 300 kann wiederum ein tragbares Fitnesssystem sein, in dem das personenbezogene Modul 110 implementiert ist (z.B. als eine App). In der Regel können aber mehrere personenbezogene Module 110 und dementsprechend mehrere mobile Geräte 300 für verschiedene Insassen des Fahrzeugs 200 vorhanden sein, die alle mit dem fahrzeugbezogenen Modul 120 kommunizieren.

Das abgesicherte Gateway 420 stellt insbesondere die folgenden Funktionen bereit:
1. Vor einer Verbindung des personenbezogenen Moduls 110 und des fahrzeugbezogenen Moduls 120 bzw. 420 wird eine Identifikation des Nutzers 10 vom personenbezogenen Modul 110 durchgeführt und wie vorher dargestellt validiert.
2. Die Zuordnung der Sitze 101 zu den Nutzern durchgeführt und überprüft.
3. Optimale Einstellungen, die im personenbezogenen Modul "Optimale Einstellungen" 419 gespeichert sind, werden zu Beginn der Fahrt vorgenommen. Hierbei können tages-individuelle Einstellungen berechnet werden, die die vorherigen Aktivitäten außerhalb des Fahrzeugs wie zum Beispiel Sport etc. mit einbeziehen.
4. Die Sicherheit der Informationen wird gewährleisten. Es wird insbesondere sichergestellt, dass durch Anpassungen im Fahrzeug keine gefährliche Verkehrssituationen eintreten können (z.B. Ändern der Sitzposition, die die sichere Bedienung unmöglich machen).
5. Gesundheitsbezogene Sensordaten, die im Auto anfallen, werden ausgewertet und bedarfsgerecht Anpassungen im Fahrzeug werden vorgenommen.
6. Daten, die im Fahrzeug anfallen, werden ausgewertet und nur aggregierte oder spezifisch selektierte Daten und Informationen an die jeweiligen tragbaren Fitnesssysteme 300 zurückgesandt. Dadurch wird Energie (in der Batterie) im personenbezogenen Modul 110 eingespart und der Informationsfluss zwischen dem personenbezogenen Modul 110 und dem fahrzeugbezogenen Modul 120 bzw. 420 kann optimiert werden (geringere Latenz, bessere Nutzung der Bandbreite). Zur Senkung des Energieverbrauchs kann auch die Bandbreite für Übertragungen zwischen dem personenbezogenen Modul 110 und dem fahrzeugbezogenen Modul 120 optimiert werden.

Gemäß weiteren Ausführungsbeispielen umfasst das Gateway 420 als weiteres Funktionsmodul eine "Management der Programmier-Schnittstellen (API)" 427. Dies ist insbesondere dann vorteilhaft, wenn verschiedene Sensoren im Fahrzeug 200 oder tragbaren Fitness-Systeme 300 von verschiedenen Herstellern verbunden werden sollen. In der Regel handelt es sich hier um ein System zum Management der Programmierschnittstellen wie sie dem Fachmann bekannt sind (häufig mit dem Akronym API bezeichnet).

Das beispielhafte Gateway 420 kann beispielsweise die Daten und Informationen für alle Sitzplätze 101 und relevanten Systeme im Fahrzeug 200 steuern und transferieren. In einer möglichen Ausgestaltung kann das Gateway 420 direkt in Autositzen 101 oder an anderen relevanten Teilen des Fahrzeugs 200 wie Übertragungseinheiten für Bluetooth und Mobilfunk etc. ausgebildet sein. Vorteilhafterweise umfasst es bei dieser Ausgestaltung eine zentrale Einheit zur Identifikation oder kann darauf zugreifen, die für das Sicherheitsmanagement und dem Management der externen Schnittstellen genutzt werden kann.

Das Gateway 420 kann aber auch eine Schnittstelle zu einer im Fahrzeugbau benutzten sogenannten "CAN (Communication and Accelerated Networks)" Einheit sein oder aufweisen, wobei der Datentransfer im Auto mit verschiedenen Methoden wie Kryptografie absichert werden kann. Gemäß Ausführungsbeispielen umfasst das Gateway 420 innerhalb des CAN als Unter-Modul - wie dargelegt - eine eigene Absicherung für das fahrzeugbezogene Modul 120, die steuert welche Daten und Informationen in welcher Form weitergegeben werden und wie zum Beispiel die Sitze 101 angepasst werden dürfen.

Das fahrzeugbezogene Modul 120 steuert die Fahrzeugkomponenten 230 (z.B. Systeme zur Anpassung des Fahrzeugs) bzw. erhält Informationen oder Daten von den vorhandenen Sensorsystemen (siehe Fig. 2 oder Fig. 3). Die in Fig. 5 dargestellten Systeme brauchen nicht in einer Einheit zusammengefasst sein und können für sich eigenständige Systeme sein, die auch eigene Berechnungen und Datenanalysen betreiben. Gemäß einem Ausführungsbeispiel sind das fahrzeugbezogene Modul 120 und zumindest einige der Fahrzeugkomponenten 230 zusammen in ein integriertes Gesamtsystem zusammengefasst. Dieses Gesamtsystem zeichnet sich dadurch aus, dass die Schnittstellen einfacher und schneller gestaltet und verbunden werden können, die Latenz geringer ist und dass die Qualität der Datenanalyse deutlich steigt.

Zur Ansteuerung der Fahrzeugkomponenten 230 können folgende Module (z.B. in den Fahrzeugkomponenten 230 oder separat davon) ausgebildet sein. Dem Autositz 101 ist ein Modul zum Management 101a der Autositze 101 zugeordnet. Dieser bekommt nur die für ihn notwendigen Informationen zur Sitzeinstellung 101a. Im Autositz 101 können sich aber Sensoren befinden, die Sitz-Daten 101b liefern. Dem Lenkrad 103 ist ein Modul für das Lenkrad zugeordnet, womit die Lenkrad-Einstellungen 103a geändert werden können und Lenkrad-Daten 103b ermittelt werden können. Das Entertainment-System 404 kann optional ebenso angesteuert werden. So können die Entertainment-Einstellungen 404a geändert und Entertainment-Daten 404b ermittelt werden. Hierzu gehören z.B. Einstellung bezüglich der Lautstärke, Musikstil oder Kennziffern wie Beats-per-Minute etc. Einstellung zum Fahrstil (z.B. Beschleunigung, Fahrwerkseinstellungen etc.) können durch das Modul 405 geändert oder erfasst werden. Es können auch Sensor-Module 406 zur Ermittlung von Kardio-Daten vorhanden sein, bei denen kein Unter-Modul zum Einstellen vorhanden sein braucht. Und es sind auch Module zum Einstellen möglich, bei denen eine Auswertung der Daten keinen oder zu geringen Nutzen bietet (z.B. Spiegel-Einstellung).

Das tragbaren Fitnesssystem 300 kann folgende Module umfassen, die Teil vom personenbezogenen Modul 110 sein können oder auf die das personenbezogene Modul 110 zumindest zugreifen kann. Die Module umfassen ein Identitätsmodul mit Informationen zur Identifikation 411, eine Sende- und Empfangseinheit 412 und ein Modul 413 mit dem Grundprofil des Nutzers bzw. weiteren Informationen über den Nutzer, die nicht direkt für die Identifikation eingesetzt werden, aber für die Nutzung im Fahrzeug und zur individuellen Anpassung des Fahrzeugs wichtig sind. Dies sind sich nicht oder nur sehr langsam sich verändernde

Daten und Einstellungen. Beispiele können Größe, Beinlänge, etc. sein.

Weitere optionale Module im tragbare Fitness-System beziehen sich auf Bio-Mechanische Grund-Daten 414 wie Schrittlängen, Abrollen des Fußes, berechnete Stellung der Hüfte (Skoliose) etc. Diese Daten können durch die Sensoren im mobilen Gerät 300 erfasst und berechnet werden. Optional kommt hier noch eine medizinische Auswertung im Labor oder Klinik dazu, die diese Informationen validiert oder ersetzt. Diese Informationen können sich im Zeitablauf in der Regel nur über einen längeren Zeitraum ändern.

Ebenso kann ein Modul zu Bio-Mechanische Verhaltens- und Statusdaten 415 wie Bewegungs-, Steh- und Sitzdaten vorhanden sein, die sich auf folgende Fragen beziehen können: wie häufig wurde gelaufen (mit welcher Geschwindigkeit, Abrollverhalten z.B. mit verschiedenen Ermüdungszuständen, Variation der Schrittlänge, etc.), gesessen, gelegen oder gestanden. Sind die Verhaltensmuster innerhalb eines bestimmten - als normal - bewerteten Bereiches oder weichen diese ab (und wie stark). Welche Ermüdung der Muskeln und des Nutzers insgesamt lässt sich ableiten. In einer Langfrist-Betrachtung können diese Daten 415 auch für Anpassungen der Grunddaten 414 genutzt werden.

Durch die Einteilung in Module bzw. Datenpools mit unterschiedlicher Veränderungsmöglichkeit und den daraus berechneten Nutzerprofilen sind weniger Rechenkapazitäten und schnellere Berechnungen und Anpassungen des Fahrzeugs möglich. Durch das Grundprofil 413 und die Profile der biomechanischen Grunddaten 414 kann sofort eine Grundeinstellung bei den Sitzen 101 vorgenommen werden, sobald das personenbezogenen Modul 110 sich identifiziert hat. Zeitgleich zum Identifikationsvorgang müssen dann nur die biomechanischen Verhaltens- und Statusdaten mit dem dann zeitaktuellen Daten ausgewertet und die Sitzeinstellung entsprechend nur noch fein-angepasst werden. Dadurch können die Latenz und der Energieverbrauch verringert werden.

Weitere optionale Module beziehen sich auf Herz-Daten 416 wie zum Beispiel Herzfrequenz, Herzvariabilität, EKG Daten etc. oder auf Stress-Indikatoren 417, die sich zum Beispiel aus dem Abgleich von Herzdaten mit Bewegungsdaten, Temperatur etc. ergeben. Sie können auch gezielt über Sensoren wie elektrische Leitfähigkeit auf der Haut gemessen werden. Ein Beispiel ist, dass mittels geeigneter Kriterien wie Herzfrequenz, Herzvariabilität, Hirnströme die Stressbelastung eines Nutzers 10 ermittelt wird. Je stärker der Nutzer 10 gestresst ist, umso entspannender wird die Fahrwerkseinstellung, Fahrweise (größerer Abstand, langsamere Beschleunigung bei selbst- oder teilweise selbstfahrenden Systemen etc.), entspannendere Musik (weniger Beats etc.) gewählt. Gemäß Ausführungsbeispielen können im Informationssystem in den Bildschirmen oder den "Augmented-Reality" Scheiben weniger Informationen gezeigt oder gesagt werden oder wichtige Navigationshinweise werden bei Müdigkeit öfter wiederholt und lauter gesagt, etc.

Es können aber auch separate tragbare Personal-Fitness-Systeme zum Beispiel für Kardio-Daten und Bewegungs-, Steh- und Sitzdaten vorhanden sein und genutzt werden. Zum Beispiel kann ein System zum Erfassen von Bewegungs-, Steh- und Sitzdaten von Hersteller A und ein System zum Erfassen von Herzdaten von Hersteller B und ein Schlaf-Tracker von Hersteller C genutzt werden. In diesem Falle übernimmt das fahrzeugbezogene Modul 120 die Funktion, die Daten für die Nutzung im Fahrzeug als zentrales Hub zu erfassen und zu bündeln. In allen separaten tragbaren Personal-Fitness-Systemen sind entsprechende Identitätsmodule 411 vorhanden bzw. die Personal-Fitness-Systeme sind einem Fitness-System mit einem Identitätsmodul 411 gekoppelt oder können darauf zugreifen, um eine Identitätsprüfung durchzuführen.

Das personenbezogene Modul 110 bzw. das mobile Gerät 300 kann daher die permanente Fitness-Anwendung darstellen, auf der alle Informationen und Daten im ausreichenden Umfang gesammelt und gespeichert werden. Wenn mehrere verschiedene Fahrzeuge benutzt werden, dann können diese Daten und Informationen im personenbezogenen Modul 110 zusammengeführt werden. Das fahrzeugbezogene Modul 120 bzw. die Fahrzeugkomponente 230 bekommt dagegen nur Informationen soweit dies erforderlich ist und übernimmt nur temporär bestimmte Aufgaben, die Anpassungen im Fahrzeug sowie Datensammlung, -zusammenführung und Datenauswertung ermöglichen.

Ebenso braucht das fahrzeugbezogene Modul 120 dem personenbezogenen Modul 110 auch nicht alle Daten zur Verfügung zu stellen, sondern wertet diese mittels zur Verfügung gestellter Daten-Algorithmen aus. Das personenbezogene Modul 110 kann dem fahrzeugbezogene Modul 120 ein Daten-Auswerte-Instrument 418 zur Verfügung stellen, wobei die Datenauswertung 418 dem fahrzeugbezogene Modul 120 mitteilen kann, welche Daten in welcher Form benötigt werden.

Das Daten-Auswerte-Instrument 418 umfasst beispielsweise Daten-Algorithmen zur Auswertung und kann sofort nach Verknüpfung des personenbezogenen Moduls 110 und fahrzeugbezogenen Moduls 120 zur Verfügung stehen, um die Daten eines Nutzers vom personenbezogenen Modul 110 und dem fahrzeugbezogenen Moduls 120 auszuwerten. Das Daten-Auswerte-Instrument 418 umfasst alle notwendigen Daten-Algorithmen, Regeln, Software, Profile etc. zum Betrieb, aber vorteilhafterweise nur in dem unbedingt erforderlichen Umfang. Dadurch kann es bei Bedarf Daten/Ergebnisse direkt vom personenbezogenen Modul 110 an das fahrzeugbezogenen Modul 120 über die Sendeeinheit 412 senden und in dem fahrzeugbezogenen Moduls 120 genutzt oder implementiert werden.

Das Senden vom personenbezogenen Modul 110 an das fahrzeugbezogenen Modul 120 braucht Energie, die infolge des stark begrenzten Energiespeicher im personenbezogenen Modul 110 oft knapp ist. Ausführungsbeispiele nutzen dies daher für den Fall, dass keine Mobilfunkverbindung vom Fahrzeug zu einer Cloud zur Verfügung steht. Andererseits, steht eine Cloud-Anbindung zur Verfügung, dann kann der Prozess wie folgt ablaufen. Das personenbezogene Modul 110 identifiziert sich bei dem fahrzeugbezogenen Modul 120, wodurch gleichzeitig auch das fahrzeugbezogenen Modul 120 autorisiert wird, sich das Daten-Auswerte-System 418 bzw. dessen Ergebnisse aus der Cloud 440 herunterzuladen. Das personenbezogene Modul 110 teilt dazu dem fahrzeugbezogenen Modul 120 und damit auch der Cloud mit, um welche Version es sich handelt. Dadurch wird vermieden, dass in der Cloud neuere Versionen von der Daten-Auswertung 418 existieren und auch das personenbezogenen Modul 110 mit der neuesten Version versehen werden müsste, was bei dem personenbezogenen Modul 110 zu einem hohen Energieverbrauch führen und auch länger dauern würde.

Das Daten-Algorithmen-Lerninstrument 441 entwickelt, gemäß Ausführungsbeispielen, bestehende Daten-Algorithmen weiter oder entwickelt neue Daten-Algorithmen. Zur Weiterentwicklung neuer Daten-Algorithmen werden die Daten vieler Nutzer analysiert. Diese Trennung von dem Daten-Auswerte-Instrument 418 und dem Daten-Algorithmus-Lerninstrument 441 ist bei tragbaren oder mobilen Geräten gemäß Ausführungsbeispielen eine wichtige Innovation für den Bereich maschinelles Lernen oder künstliche Intelligenz, da der hohe zusätzliche Energieverbrauch von dem Daten-Algorithmus-Lerninstrument 441 in Zeiten verlagert werden kann, in denen ausreichende Ressourcen (z.B. Energie, schnelle Netzwerkanbindung) zur Verfügung steht.

Die vorliegende Erfindung soll sich auch auf diesen um im Folgenden detaillierter beschriebenen Aspekt der Aufteilung der Datenerfassung, Datenauswertung und des Lernens durch ein Lerninstrument beziehen.

Das Daten-Algorithmen-Lerninstrument 441 benötigt zusätzliche und zum Teil sehr umfangreiche Energie. Hier können mittels der Methoden der künstlichen Intelligenz neue Daten-Algorithmen entwickelt oder bestehende weiterentwickelt werden. Danach kann sie in periodischen Abständen in der Datenauswertung 418 integriert werden. Bei der Datenauswertung 418 werden die aktuellen Daten-Algorithmen zum Betrieb der Systeme genutzt; wozu aber keine Instrumente zum Lernen/Weiterentwicklung erforderlich sind (und daher auch nicht enthalten zu sein brauchen). Diese würden nämlich zusätzliche Energie und Übertragungsbandbreite etc. benötigen, die nicht immer ausreichend zur Verfügung steht. Durch die Aufteilung in Daten-Algorithmen-Lerninstrument 441 und Daten-Auswertung 418 kann daher in Zeiten mit begrenzten Ressourcen nur die Datenauswertung 418 genutzt werden. Die begrenzten Ressourcen beziehen sich beispielsweise auf die verfügbare Energie, verfügbare Datenbandbreite, Speicherkapazität, Rechenkapazität (z.B. ein Batteriebetrieb von Fahrzeug oder tragbarem Gerät oder nur Bluetooth-Verbindung statt 5G oder W-Lan).

Daten-Algorithmen-Lerninstrument 441 wird in diesem Ausführungsbeispiel nur zur temporären Nutzung dem fahrzeugbezogene Modul 120 bzw. dem abgesicherten Gateway 420 zur Verfügung gestellt. Das Daten-Algorithmen-Lerninstrument 441 ist abgesichert, d.h. es kann nicht vom Gateway 420 gelesen, kopiert werden etc. Im Folgenden kann es sich bei dem Gateway 420 immer auch um das fahrzeugbezogene Modul 120 handeln. Eine temporäre Speicherung im Gateway 420 wird nur durch das Daten-Algorithmen-Lerninstrument 441 autorisiert und gemanagt. Dadurch wird das in dem Daten-Algorithmen-Lerninstrument 441 befindliche Wissen und Know-how geschützt.

Dies ist auch bei Datenauswertung 418 grundsätzlich der Fall, wobei die Speicherung der Datenauswertung 418 in dem fahrzeugbezogenen Modul 120 länger oder dauerhafter sein kann. Beide Systeme stellen über die dem Fachmann bekannten Verfahren sicher, dass persönliche Daten des Nutzers vom tragbaren Gerät 300 in den Gateway 420 für die Auswertung durch die Datenauswertung 418 und auch für Weiterentwicklung der Daten-Algorithmen durch Daten-Algorithmen-Lerninstrument 441 mit fahrzeugbezogenen Daten genutzt werden können. Nach dieser Nutzung können diese Daten in dem Gateway 420 wieder gelöscht werden. Nur unbedingt notwendige Daten des Nutzers werden selektiert und auf das Gerät 300 oder die zu dem Gerät 300 gehörige Cloud gespielt.

Diese Trennung von Daten-Algorithmen (Daten-Algorithmen Lerninstrument 441) und Auswertung in dem Datenauswertungsmodul 418 soll ein eigenständiger Aspekt der vorliegenden Erfindung sein, der auch in vielen anderen Bereichen einsetzbar ist.

Daten-Algorithmen Lerninstrumente 441 können beispielsweise mit Daten vieler Nutzer in großen Rechnerzentren durchgeführt werden (Daten-Volumen-Effekt). Hierfür können die Daten der tragbaren Fitnesssysteme oder auch der Fahrzeuge zu verschiedenen Rechenzentren transferiert werden. Die vorliegende Erfindung bedarf aber die bedarfsgerechte gemeinsame Auswertung sehr verschiedener Daten und es stellt sich die Frage der entsprechenden Datenhoheit an den privaten und entsprechenden Bio-Daten des jeweiligen Nutzers. Es soll damit eine bedarfsgerechte gemeinsame Auswertung in einem Umfeld, in dem die zur Verfügung stehende Energie und Transferbandbreite sehr stark schwankt und in manchen Phasen stark limitiert ist, erreicht werden.

Um den Daten-Volumen-Effekt zu nutzen, aber trotzdem nicht alle Daten in einem Datenpool zusammenführen zu müssen, kommen die folgenden Methoden zum Einsatz:
1. In Phasen mit ausreichenden Ressourcen (guter Batterieleistung und sehr guter Transferbandbreite, z.B. 5G) werden alle oder viele gezielt ausgewählte Daten in einen fusionierten Datenpool in einem Rechenzentrum transferiert oder es besteht permanenter Datenaustausch zwischen dem fahrzeugbezogenen Modul 120 und der Cloud 440.
2. Die Daten können markiert werden (z.B. vor einem Transfer), die die Daten identifiziert (z.B. von wem sind die Daten oder wem gehören sie) oder ob diese Daten nach bestimmter Zeit oder nach bestimmten Auswerteprozessen gelöscht werden sollen. Hier kann es sich um eine einfache zusätzliche Klassifizierung handeln (z.B. eine Spalte mit Namen der Dateneigentümer etc.).
3. In dem großen, zusammengeführten Datenpools können mittels der bekannten Methoden aus der künstlichen Intelligenz Wirkungszusammenhänge und sogenannte Muster ermittelt werden. Da aber nur ein Teil der Daten der Nutzer vorhanden ist, fallen einige Zusammenhänge statistisch weniger signifikant aus. Für diese können gezielt spezifische Analyseverfahren genutzt werden und im Daten-Algorithmen Lerninstrument 441 temporär integriert werden. Der Daten-Algorithmen Lerninstrument 441 wird dann gezielt in Zeiten mit guter Energieversorgung und Transferbandbreite (zum Bsp. beim Ladevorgang zu Hause etc.) auf den Gateway 420/fahrzeugbezogenen Modul 120 transferiert und dort gespeichert bis wieder eine gute Energieversorgung und Bandbreite besteht. Das Daten-Algorithmen Lerninstrument 441 überprüft dann auch in Zeiten mit begrenzter Energieversorgung und Transferbandbreite die anfallenden Daten gezielt auf die Zusammenhänge. Hierbei wird nur ein eingeschränktes Daten-Lernen angewendet, und zwar gezielt ausgerichtet auf den Fall, nur einen Teil der Daten oder nur einen Teil von möglichen Wirkungszusammenhängen zu testen.

Ein Modul in dem Gateway 420 erfasst dafür periodisch die Transferbandbreite und Energieversorgung des Fahrzeugs und der tragbaren persönlichen Geräte 300 und steuert dementsprechend die verschiedenen dargestellten Transfer- und Auswertemethoden. In der Fig. 5 ist dieser Austausch/Transfer durch die Doppelpfeile schematisch dargestellt.

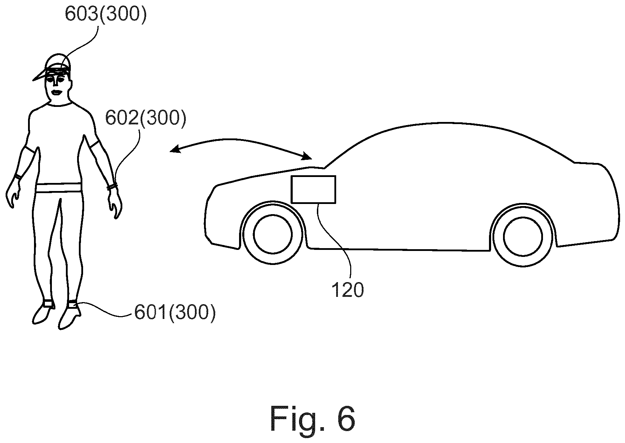

**Fig. 6** zeigt ein weiteres Ausführungsbeispiel für ein mobiles Gerät 300, das gemäß Ausführungsbeispielen ein tragbares Personal-Fitnesssystem zur frühen Erkennung von sich anzubahnenden Schlaganfällen und Ohnmachtszuständen umfasst. Die gleiche Hardware kann mit veränderter Software und Daten-Algorithmen auch eingesetzt werden, um den jeweils vorliegenden Gesundheitszustand bei Krankheiten wie beispielsweise Schlaganfall oder Alzheimer oder Parkinson zu ermitteln. Bei diesen Krankheiten schwanken die Gesundheitszustände sehr stark. Das Gerät 300 kann den Zustand aber auch den Verlauf dieser Krankheiten prognostizieren oder erfassen.

Das mobile Gerät 300 umfasst beispielsweise ein Bewegungsanalyseinstrument 601 an den Füssen, um Zittern in den Beinen oder eine Veränderung der Fußbewegungen zu erkennen. Da vor einem Schlaganfall häufig ein Zittern in den Füssen eintritt, kann ein sich anbahnender Schlaganfall frühzeitig und verlässlich erkannt werden. Rettungskräfte können dann frühzeitig informiert werden, sodass im Falle des Schlaganfalls auftretende Schäden geringer ausfallen oder sogar komplett vermieden werden können.

Bei Parkinson, Alzheimer oder Epilepsie verändern sich die Bewegungen beim Gehen, der Gang wird breiter, weniger symmetrisch etc.. Daher ist auch hier der Einsatz von Sensoren an den Füssen, Beinen oder Armen wichtig. Zur sicheren Diagnose von einem sich anbahnenden Schlaganfall, der Zustandsdiagnose bei Alzheimer oder Parkinson ist ein kombinierter Einsatz verschiedener Sensoren sinnvoll. Gemäß Ausführungsbeispielen umfasst das mobile Gerät 300 daher zum Beispiel ein tragbares Herz-Analyse-System 602, das die Herzfrequenz und -variabilität ermittelt und nach Möglichkeit auch ein EKG erstellen kann. Ebenso möglich ist eine zusätzliche Kombination mit einem tragbaren Sensors-System 603, das Hirnströme misst. Dies kann zum Beispiel in eine Kopfbedeckung (z.B. ein Baseballcap) integriert sein. Durch die kombinierte Datenauswertung der verschiedenen Sensoren (z.B. in dem Herz-Analyse-System 602) kann eine Diagnose mit hoher Wahrscheinlichkeit gestellt werden.

Ein Aspekt der vorliegenden Erfindung bezieht sich auch auf eine eigenständige Sensoranordnung mit einem Fußsensor 601 und einem Herz-Analyse-System 602. Optional kann in dieser Sensoranordnung auch ein Sensor, die die Hirnaktivität erfassen kann, vorhanden sein. Diese Sensoranordnung kann die gleichen Funktionen bereitstellen, wie sie im Rahmen der anderen Ausführungsbeispiele für das mobile Gerät 300 beschrieben wurden, koppelt jedoch nicht zwingend an ein fahrzeugbezogenes Modul 120.

Das tragbare Fitness-System 300 kann zum Erkennen eingesetzt werden, ob eine Verschlechterung der Fahrtüchtigkeit eingetreten ist. Bei Patienten, bei denen das System auf den Weg zum Auto Anzeichen eines sich anbahnenden Schlaganfalls, Parkinson, Alzheimer etc. erkennt, kann gemäß Ausführungsbeispielen das Auto auf den selbstfahrenden Modus eingestellt oder das Starten der Antriebssysteme durch den Nutzer verhindert werden. Sobald das System eine Fahruntüchtigkeit des Nutzers durch gesundheitliche Einschränkungen oder Ernstfälle erkennt, kann es daher gemäß Ausführungsbeispielen in den voll autonom-fahrenden Modus geschaltet und die nächste sichere Parkmöglichkeit ansteuern und optional Rettungskräfte oder Pflegepersonal informiert werden.

Durch die automatische Kombination der Daten der tragbaren Komponenten 601, 602 und 603 des mobilen Gerätes 300 mit den Daten des fahrzeugbezogenen Moduls 120 (z.B. Fahrstildaten, Kameraauswertungen etc.) kann die Prognosequalität der Berechnungen deutlich erhöht. Vor allem können Ausführungsbeispiele zeitkritische technische Prozesse beschleunigt werden. In Gesellschaften mit vielen älteren Personen kann dadurch immer noch eine Mobilität gewährleistet werden, ohne dass Sicherheitsrisiken für unbeteiligte Dritte ansteigen sollten. Gerade in ländlichen Gebieten ist dies ein großer Vorteil.

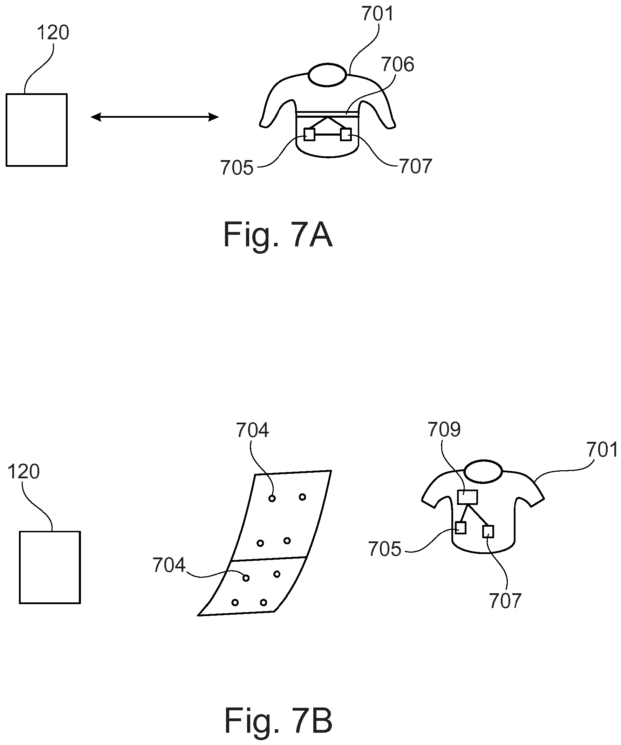

**Fig. 7A, 7B** veranschaulichen weitere Ausführungsbeispiele, bei dem ein Sensor-System an einer Bekleidung 701 des Nutzers vorhanden ist.

Fig. 7A zeigt den Fall, dass das Sensor-System im Bekleidungsstück 701 mit dem fahrzeugbezogenem Modul 120 - ohne direkten Bezug zum Autositz - kommuniziert, während die Fig. 7B den Fall zeigt, wo Autositz 101 in die Kommunikation integriert ist. Das Sensor-System in dem Kleidungsstück 701 kann gemäß Ausführungsbeispielen verschiedene Parameter wie Herzfrequenz (Sensor 706) messen und überträgt dies mittels einer Transfereinheit 705 durch drahtlose Technologien wie Bluetooth an das fahrzeugbezogene Modul 120. Optional ist eine Energieversorgung 707 für die Sensoren, Datentransfer etc. vorhanden.

Fig. 7B zeigt ein Ausführungsbeispiel mit einem Fahrzeugsitz 101, der beispielsweise Kontaktpunkte 704 umfasst, mit denen der Körper - egal in welcher Sitzposition - in Berührung gelangt. Über diese Kontaktpunkte 704 kann das Bekleidungsstück 701 des Nutzers mit Energie versorgt werden, wobei das Bekleidungsstück 701 dazu entsprechende Kontaktpunkte oder Kontaktflächen 709 beispielsweise auf einer Rückseite aufweist. Ein Datenaustausch ist über diese Kopplungen ebenfalls möglich. Weitere Ausführungsbeispiele beziehen sich somit auch auf ein Bekleidungsstück 701 mit den genannten Merkmalen (Kontaktflächen 709, Energieversorgung 707, Transfereinheit 705 etc.).

Die Sensoren in oder an dem Bekleidungsstück 701 können zum Beispiel Sensoren zur Druckmessung, Herzfrequenz- oder EKG-Messung, elektrischen Leitfähigkeit (zum Beispiel zur Bestimmung der Muskeltätigkeit, Schweißausscheidung, Stressbelastung etc.), Temperatur, etc. umfassen.

Gemäß weiteren Ausführungsbeispielen kann das Kleidungsstück 701 auch mechanische und elektrische Elemente zur Massage, zum Heizen oder Kühlen oder zur Elektrostimulation aufweisen. Dadurch können Muskelpartien entspannt, trainiert oder die Temperatur direkt auf der Haut gezielt für bestimmte Bereiche des Körpers optimiert werden. Die Zeit im Auto kann daher auch gezielt für medizinische oder physiotherapeutische Maßnahmen genutzt werden.

Ausführungsbeispiele stellen nicht nur eine schnelle und technisch effiziente zusätzliche Energieversorgung zur Verfügung (es kann auch ein Energiespeicher im Bekleidungsstück geladen werden), sondern ermöglichen auch einen energieeffizienten und schnellen Datenaustausch zwischen dem fahrzeugbezogenen Modul 120 und dem Bekleidungsstück 701.

Das tragbare Kardio-System 706 kann permanent die Herzaktivitäten analysieren. Die Herzaktivitäten können schwanken, ohne dass bereits gesundheitliche Probleme vorliegen. Diese Schwankungen können außerdem von Mensch zu Mensch sehr unterschiedlich ausfallen. Optional kann ein weiteres System in den Schuhen oder an den Beinen vorhanden sein, um auch dort Biodaten (Pulse, Blutdruck etc.) permanent zu erfassen.

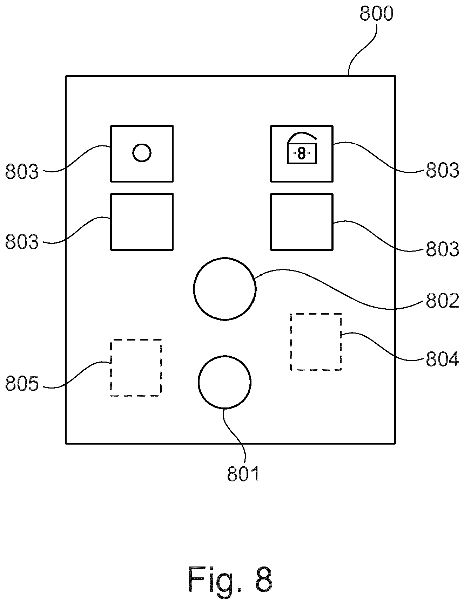

**Fig. 8** zeigt ein Ausführungsbeispiel für ein persönliches, tragbares Identifikationssystem 800 mit einem Fingerabdruckscanner 801, Augen-Iris-Scanner 802, Eingabetasten 803, Sensoren zur räumlichen Positionserkennung wie zum Beispiel GPS 804, Acceleratoren und Gyroskopen 805. Dieses System kann auch in anderen mobilen Geräten 300 wie Uhren, Telefonen, Fernsteuerungen, Brillen oder Bekleidungsstücken untergebracht werden. Gemäß Ausführungsbeispielen kann auch dieses System 800 das personenbezogenen Modul 110 aufweisen (z.B. in einer Steuereinheit).

Durch Fingerabdruck- oder Augen-Iris-Scan durch den Scanner 802 kann eine Identifikation und Autorisierung der Person durchführen. Da auch diese Sicherungsmethoden grundsätzlich manipulierbar sind, können zusätzliche Sicherungs- und Plausibilitäts-Checks durchgeführt werden. Durch die gemeinsame Auswertung der Daten der Gyroskope und Acceleratoren 805, sowie der Eingabetasten 803 kann ermittelt werden, ob das Trage- und Nutzungsverhalten des Nutzers sein typisches Nutzungsverhalten aufweist.

Durch dieses Identifizierungssystem 800 kann daher nicht nur die Identität des Nutzers validiert werden, sondern auch festgestellt werden, ob der Nutzer in der Lage ist, ein Fahrzeug zu führen. Bei erhöhten Alkoholwerten oder Drogeneinnahmen weicht das Nutzungs- und Trageverhalten erheblich vom normalen Verhalten ab. Dies kann auch bei Krankheiten wie Parkinson oder Alzheimer der Fall sein. Abweichungen von einem definierten Norm-Bereich würden entsprechend dazu führen, dass der Nutzer sich zwar positiv identifiziert hat, er aber durch das System nicht autorisiert wird, das Fahrzeug zu führen. Hierfür kann das personenbezogene Modul 110 in dem Identifizierungssystem 800 eine entsprechende Information oder Anweisung an das fahrzeugbezogene Modul 120 senden.

Bei weiteren Ausführungsformen kann dieses Verfahren aber auch für andere Bereiche wie Operationssaalzutritt, Bedienung von Maschinen, Abgabe von Kauf- oder Verkaufsangeboten bei Börsen, Bestellvorgängen etc. eingesetzt werden.

Durch die Kombination der Identitätsprüfung mit einer verhaltensbasierten Autorisierung wird die technische Abwicklung/Prozesse vorteilhafterweise erheblich beschleunigt und weist eine höhere Sicherheit auf.

Vorteilhafte Aspekte von Ausführungsbeispielen können wie folgt zusammengefasst werden:
Eine technische Anordnung eines umfassendes (Bio-) Managementsystems im Fahrzeug erfasst nicht nur Daten, sondern verändert auch die Einstellungen im Fahrzeug bedarfsgerecht und leitet Maßnahmen ein, die zu einem gesünderen Verweilen - und insbesondere Sitzen - im Fahrzeug führt.

Das beschriebene Managementsystem im Fahrzeug ist mit verschiedenen Fitnesssystemen über die Ausführungsbeispielen zu Grunde liegende technische Architektur automatisch schnell koppelbar, wobei durch das technische Design eine hohe Sicherheit der Daten und der Privatsphäre erreicht wird. Es soll sich dabei nicht um eine zusätzliche Verschlüsselungstechnologie handeln, sondern um eine neue technische Architektur, die ein sogenannte Sicherheit "by Design" ermöglicht.

Ausführungsbeispiele bieten nicht nur mehr Sicherheit und einen schnelleren technischen Verbindungsaufbau, sondern einen technisch optimierten Datenaustausch zwischen Personal-Health- und Fitnesssystemen und Bio-Management-Systemen im Fahrzeug bezüglich Übertragungsrate, -volumen etc.. Dadurch wird eine geringere Latenz erreicht. Außerdem wird Batteriekapazität bzw. Energie bei den tragbaren Personal-Health- und Fitnesssystemen und auch den Bio-Management-Systemen im Fahrzeug gespart.

Viele Unfälle im Straßenverkehr werden durch plötzliche auftretende Gesundheitsprobleme mit teilweiser oder vollständiger Fahruntüchtigkeit wie Herzinfarkt, Schlaganfall etc. verursacht. Mit dem deutlichen Anstieg des Durchschnittsalters in vielen Ländern nehmen diese plötzlich auftretenden Gesundheitsprobleme zu. Selbst bei teilweise oder vollständig selbstfahrenden Autos wird bisher nicht mit einer bedarfsgerechten Aktion reagiert. Dadurch dass bei gesundheitlichen Problemen wahrscheinlich die Füße vom Gaspedal gleiten, rollt das Auto zwar langsam aus, es kommt aber nicht zu einem ursachengerechten und gezielten Abbremsvorgang und Aufsuchen des Seitenstreifens oder der nächsten Parklücke und eine sofortige bedarfsgerechte Alarmierung der Notrufzentrale. Ausführungsbeispielen ermöglichen einem integrierten Fitness-System, derartige plötzlich auftretenden gesundheitliche Probleme zu erkennen und das Auto bedarfsgerecht zu steuern.

Weitere Vorteile von Ausführungsbeispielen beziehen sich auf die folgenden Aspekte:
- Das mobile Gerät 300 mit dem personenbezogenen Modul 110 ermöglicht ein "Identitätsmanagement as a Service (IDaaS)".
- Ein "Connected Fitness" im Fahrzeug wird umgesetzt, und zwar auch ohne mobiles Gerät - z.B. durch eine fortlaufende Überwachung des Fahrers während des Fahrens. Auf Änderungen des (Gesundheits-) Zustandes kann sofort reagiert werden. Die beste Sitzposition kann ermittelt und auch während der Fahrt gezielt geändert werden.
- Ein Austausch mit externen Systemen erlaubt eine Arbeitsteilung oder eine fortlaufende Optimierung.
- Ein Identitätsmanagement für Sitzpositionen wird ermöglich.
- Eine effizienter interaktiver Datenaustausch wird durch aufgezeigte Architektur umgesetzt.
- Die Architektur und die Prozesse für die Datensicherheit verbleibt bei der Connected Fitness im Auto; die persönlichen Daten auf tragbaren persönlichen Geräten. Dadurch ist eine klare Regelung bezüglich Sicherheit und Schutz der Privatsphäre getroffen.

## Patentansprüche

1. Managementsystem zur Identifikation und zum Bio-Monitoring in einem Fahrzeug (200) bezüglich zumindest eines Nutzers mit einem personenbezogenen Modul (110), das ausgebildet ist, um auf persönliche Daten des Nutzers (10) zuzugreifen und dadurch den Nutzer (10) zu identifizieren, und das personenbezogene Modul (110) in einem tragbaren Gerät (300) implementiert ist, das Managementsystem umfasst:
ein fahrzeugbezogenes Modul (120), das ausgebildet ist, um auf zumindest eine Fahrzeugkomponente (230) zuzugreifen; und
ein Kommunikationsmodul (130), das ausgebildet ist, um einen Austausch von Daten zwischen dem personenbezogenen Modul (110) und dem fahrzeugbezogenen Modul (120) zu ermöglichen, auch wenn sich das personenbezogene Modul (110) außerhalb des Fahrzeugs (200) befindet,
wobei das fahrzeugbezogene Modul (120) ausgebildet ist, um basierend auf den ausgetauschten Daten zumindest eine Änderung an der zumindest einen Fahrzeugkomponente (230) zu steuern oder zu erlauben,
**dadurch gekennzeichnet, dass**
das fahrzeugbezogene Modul (120) als ein gesichertes Gateway (420) ausgebildet ist, um:
nutzerspezifische Daten nur während einer Kommunikation mit dem personenbezogenen Modul (110) zu speichern und nach einer vorbestimmten Zeitdauer nach Beendigung der Kommunikation zu löschen, und
Daten, die im Fahrzeug (200) anfallen, auszuwerten und nur aggregierte oder spezifisch selektierte Daten und Informationen an das tragbare Gerät (300) zurückzusenden.

2. Managementsystem nach Anspruch 1, wobei das Fahrzeug (200) ein oder mehrere Sensoren (102,103, ...) aufweist, die in der Lage sind, um einen Zustand oder eine Bewegung des Nutzers (10) im Fahrzeug (200) zu erfassen,
und wobei das fahrzeugbezogene Modul (120) weiter ausgebildet ist, um auf den einen oder die mehreren Sensoren (105, 106) zuzugreifen und Informationen über den Zustand oder die Bewegung des Nutzes zu erhalten und zu verarbeiten, um zumindest eines aus dem Folgenden festzustellen:
- eine Nutzung eines bestimmten Sitzplatzes,
- eine Einstellung des Sitzes,
- eine Änderung des Fitnesszustand,
- eine Gesundheitsverschlechterung,
- eine Ermüdung,
- eine Bestätigung eines anderweitig erhaltenen Resultats.

3. Managementsystem nach Anspruch 2,
das weiter eine Auswerteeinheit aufweist oder ausgebildet ist, um auf eine externe Auswerteeinheit im Fahrzeug (200) oder auf dem mobilen Gerät (300) oder auf einen externen Server zuzugreifen, um nutzerbezogene Daten zu aggregieren und auszuwerten,
wobei das Kommunikationsmodul (130) insbesondere ausgebildet ist, um Daten an die externe Auswerteeinheit über ein gesichertes Gateway zu übertragen.

4. Managementsystem nach einem der vorhergehenden Ansprüche, wobei das fahrzeugbezogene Modul (120) fest mit dem Fahrzeug (200) verbunden ist, insbesondere als Teil einer Steuereinheit,
und wobei die zumindest eine Fahrzeugkomponente (230) eine oder mehr der folgenden Komponenten oder ein Teil davon ist:
- ein Türöffner,
- eine Zündung,
- ein Bilddarstellungseinrichtung,
- eine Beschleunigungsregelung des Fahrzeugs (200),
- ein Bremssystem des Fahrzeugs (200),
- eine Kommunikations-, Navigations- oder Entertainmentsystem,
- ein Sitzeinstellungsmodul,
- ein Lenkradeinstellungsmodul,
- ein Spiegeleinstellungsmodul,
- ein Temperaturregelungsmodul,
- eine Massageeinheit.

5. Managementsystem nach einem der vorhergehenden Ansprüche, wobei das fahrzeugbezogene Modul (120) ausgebildet ist, dem Fahrzeug (200) ein Authentifizierungssignal bereitzustellen, um einen Zugriff auf die Fahrzeugkomponente (230) oder auf das gesamte Fahrzeug (200) nur zu ermöglichen, wenn der Nutzer (10) identifiziert wurde oder wenn der Nutzer (10) sich auf einen zugeordneten Platz befindet.

6. Managementsystem nach einem der vorhergehenden Ansprüche, wobei das fahrzeugbezogene Modul (120) ausgebildet ist, mit einer Vielzahl von personenbezogenen Modulen (110) zu kommunizieren und Funktionen des Fahrzeugs (200) zugänglich zu machen.

7. Fahrzeug (200) mit einem Managementsystem nach einem der vorhergehenden Ansprüche.

8. Fahrzeug (200) nach Anspruch 7, wobei das Fahrzeug (200) zumindest einen der folgenden Sensoren als Datenquelle(n) für das Managementsystem aufweist:
- eine oder mehr Kameras (104, 105),
- zumindest einen Drucksensor in einem Fahrzeugsitz (102),
- ein Thermometer,
- zumindest ein Bewegungserfassungssensor,
- ein Ultraschallsensor,
- ein Infrarotsensor,
- ein Mikrofon (106),
- eine Einrichtung zur Messung von Bio-Daten, insbesondere eines EEG/EKGs,
- ein Kraftmesssensor,
- einen Beschleunigungssensor,
- einen Feuchtigkeitsmesser,
- eine Leitfähigkeitsmesseinrichtung.

9. System zur Identifikation und zum Bio-Monitoring von zumindest einem Nutzer (10) eines Fahrzeugs (200), das System umfasst:
ein personenbezogenes Modul (110), das ausgebildet ist, um auf persönliche Daten des Nutzers (10) zuzugreifen und dadurch den Nutzer (10) zu identifizieren; und
ein Managementsystem nach einem der Ansprüche 1 bis 5.

10. System nach Anspruch 9, wobei das tragbare Gerät (300) eine Daten-Auswerte-Instrument (418) und ein Daten-Algorithmen-Lerninstrument (441) umfasst, wobei das Daten-Auswerte-Instrument (418) ausgebildet ist, um basierend auf Daten-Algorithmen die Daten auszuwerten, und das Daten-Algorithmen-Lerninstrument (441) ausgebildet ist, um basierend auf einen maschinellen Lernprozess die Daten-Algorithmen weiterzuentwickeln oder unter Nutzung einer künstlichen Intelligenz neue Daten-Algorithmen zu entwickeln,
und wobei das fahrzeugbezogene Modul (120) ausgebildet ist, um von dem personenbezogenen Modul (110) die Daten-Algorithmen zu bekommen und basierend darauf eine Auswertung der Daten durchzuführen.

11. System nach Anspruch 9 oder Anspruch 10,
wobei das personenbezogene Modul (110) ein tragbares Gerät oder ein Teil davon ist und die persönlichen Daten zumindest eines aus dem Folgenden umfasst:
- ein Passwort,
- ein Fingerabdruck,
- ein Bild,
- einen Augen-Iris-Scan,
- eine charakteristische Herzaktivität,
- ein Puls,
- ein Bestandteil oder eine Eigenschaft des Blutes,
- eine Temperatur,
- eine Ortsinformation.

12. System nach Anspruch 10 oder Anspruch 11,
wobei das personenbezogene Modul (110) ausgebildet ist, um gesundheitsspezifische Daten des Nutzers (10) zu erfassen und Informationen über potentielle Gesundheitsverschlechterungen, die die Fahrtüchtigkeit beeinflussen können, als Daten zum Austausch bereitzustellen.

13. System nach einem der Ansprüche 10 bis 12,
wobei das Kommunikationsmodul (130) ausgebildet ist, um zumindest eines der folgenden (gängigen) Protokolle zu nutzen: Bluetooth, ANT+, NFC, WiFi,
und wobei das Kommunikationsmodul (130) weiter ausgebildet ist, um die Kommunikation zu überwachen und ein nicht-autorisiertes Eindringen eines Dritten zu erkennen.

14. Verfahren zur Identifikation und zum Bio-Monitoring in Fahrzeugen (200), mit folgenden Schritten:
Erfassen (S110), durch ein personenbezogenes Modul (110), von persönlichen Daten eines Nutzers (10);
Identifizieren (S120) des Nutzers (10) basierend auf den erfassten persönlichen Daten;
Steuern (S130), durch ein fahrzeugbezogenes Modul (120), von zumindest einer Fahrzeugkomponente (230);
Austauschen (S140) von Daten zwischen dem personenbezogenen Modul (110) und dem fahrzeugbezogenen Modul (120), unabhängig davon, ob der Nutzer (10) im Fahrzeug (200) ist oder außerhalb; und
Durchführen (S150) von Änderungen, durch das fahrzeugbezogene Modul (120), an der zumindest einen Fahrzeugkomponente (230) basierend auf den ausgetauschten Daten,
**dadurch gekennzeichnet, dass**
das fahrzeugbezogene Modul (120) als ein gesichertes Gateway (420) ausgebildet ist, das weiter folgende Schritte ausführt:
Speichern von nutzerspezifische Daten nur während einer Kommunikation mit dem personenbezogenen Modul (110); und
Löschen der nutzerspezifische Daten nach einer vorbestimmten Zeitdauer nach Beendigung der Kommunikation,
wobei Daten, die im Fahrzeug (200) anfallen, ausgewertet und nur aggregierte oder spezifisch selektierte Daten und Informationen an das tragbare Gerät (300) zurückgesendet werden.

15. Computerprogrammprodukt mit darauf gespeicherter Software, die ausgebildet ist, um ein Verfahren zur Identifikation und zum Bio-Monitoring in einem Fahrzeug (200) bezüglich zumindest eines Nutzers mit einem personenbezogenen Modul (110), wobei das personenbezogenen Modul (110) ausgebildet ist, um auf persönliche Daten des Nutzers (10) zuzugreifen und dadurch den Nutzer (10) zu identifizieren, und das personenbezogene Modul (110) in einem tragbaren Gerät (300) implementiert ist, auszuführen, wenn die Software auf einer fahrzeugbezogenen Datenverarbeitungseinheit ausgeführt wird, das Verfahren umfasst:
Steuern (S130), durch ein fahrzeugbezogenes Modul (120), von zumindest einer Fahrzeugkomponente (230);
Austauschen (S140) von Daten zwischen dem personenbezogenen Modul (110) und dem fahrzeugbezogenen Modul (120), unabhängig davon, ob der Nutzer (10) im Fahrzeug (200) ist oder außerhalb; und
Durchführen (S150) von Änderungen, durch das fahrzeugbezogene Modul (120), an der zumindest einen Fahrzeugkomponente (230) basierend auf den ausgetauschten Daten,
**dadurch gekennzeichnet, dass**
das fahrzeugbezogene Modul (120) als ein gesichertes Gateway (420) ausgebildet ist, das weiter folgende Schritte ausführt:
Speichern von nutzerspezifische Daten nur während einer Kommunikation mit dem personenbezogenen Modul (110); und
Löschen der nutzerspezifische Daten nach einer vorbestimmten Zeitdauer nach Beendigung der Kommunikation,
wobei Daten, die im Fahrzeug (200) anfallen, ausgewertet und nur aggregierte oder spezifisch selektierte Daten und Informationen an das tragbare Gerät (300) zurückgesendet werden.

## Claims

1. A management system for an identification and for a bio-monitoring in a vehicle (200) with respect to at least one user with a personal data module (110) configured to access personal data of the user (10) and to thereby identify the user (10), wherein the personal module (no) is implemented in a portable device (300), the management system comprising:
a vehicle-related module (120), configured to access at least one vehicle component (230); and
a communication module (130), configured to facilitate an exchange of data between the personal module (110) and the vehicle-related module (120), even when the personal module (110) is outside the vehicle (200),
wherein the vehicle-related module (120) is adapted to control or allow at least one change to the at least one vehicle component (230) based on the exchanged data,
**characterized in that**
the vehicle-related module (120) is configured as a secure gateway (420) in order to:
store user-specific data only during a communication with the personal module (110), and delete the user-specific data after a predetermined period of time after termination of the communication; and
analyze data generated in the vehicle (200), and return only aggregated or specifically selected data and information to the portable device (300).

2. The management system according to claim 1, wherein the vehicle (200) comprises one or more sensors (102, 103, ...) capable of detecting a condition or movement of the user (10) in the vehicle (200),
and wherein the vehicle-related module (120) is further configured to access the one or more sensors (105, 106) and to obtain and process information about the condition or the movement of the user in order to determine at least one of the following:
- a utilization of a particular seat,
- an adjustment of the seat,
- a change in fitness level,
- a deterioration in health,
- fatigue,
- a confirmation of a result obtained elsewhere.

3. The management system according to claim 2,
further comprising an evaluation unit or being configured to access an external evaluation unit in the vehicle (200) or on the mobile device (300), or an external server, in order to aggregate and evaluate user-related data,
wherein the communication module (130) is configured in particular to transmit data to the external evaluation unit via a secure gateway.

4. The management system according to one of the preceding claims, wherein the vehicle-related module (120) is firmly connected to the vehicle (200), in particular as a part of a control unit,
and wherein the at least one vehicle component (230) is one or more of the following components, or a part thereof:
- a door opener,
- an ignition,
- an image display device,
- an acceleration control system of the vehicle (200),
- a braking system of the vehicle (200),
- a communication, navigation or entertainment system,
- a seat adjustment module,
- a steering wheel adjustment module,
- a mirror adjustment module,
- a temperature control module,
- a massage unit.

5. The management system according to one of the preceding claims, wherein the vehicle-related module (120) is configured to provide an authentication signal to the vehicle (200) in order to enable an access to the vehicle component (230) or tho the entire vehicle (200) only if the user (10) has been identified or if the user (10) is in an assigned seat.

6. The management system according to one of the preceding claims, wherein the vehicle-related module (120) is configured to communicate with a plurality of personal modules (110), and to make functions of the vehicle (200) accessible.

7. A vehicle (200) with a management system according to one of the preceding claims.

8. The vehicle (200) according to claim 7, wherein the vehicle (200) comprises at least one of the following sensors as data source(s) for the management system:
- one or more cameras (104, 105),
- at least one pressure sensor in a vehicle seat (102),
- a thermometer,
- at least one movement detection sensor,
- an ultrasonic sensor,
- an infrared sensor,
- a microphone (106),
- a device for measuring bio-data, in particular of an EEG / EKGS,
- an adhesive measurement sensor,
- an accelerometer,
- a moisture meter,
- a conductivity measuring device.

9. A system for an identification and for a bio monitoring of at least one user (10) of a vehicle (200), the system comprising:
a personal module (110), configured to access personal data of the user (10) and to thereby identify the user (10); and
a management system according to one of the claims 1 to 5.

10. The system according to claim 9, wherein the portable device (300) comprises a data evaluation instrument (418) and a data algorithm learning instrument (441), wherein the data evaluation instrument (418) is configured to evaluate the data based on data algorithms, and the data algorithm learning instrument (441) is configured to further develop the data algorithms based on a machine learning process or to develop new data algorithms using an artificial intelligence,
and wherein the vehicle-related module (120) is configured to receive the data algorithms from the personal module (110) and, based thereon, to carry out an evaluation of the data.

11. The system according to claim 9 or claim 10,
wherein the personal module (110) is a portable device, or a part thereof, and wherein the personal data comprises at least one of the following:
- a password,
- a fingerprint,
- a picture,
- an eye iris scan,
- a characteristic heart activity,
- a pulse,
- a component or property of the blood,
- a temperature,
- a location information.

12. The system according to claim 10 or claim 11,
wherein the personal module (110) is designed to record health-specific data of the user (10) and to provide information on potential deterioration in health, which can affect the ability to drive, as data for the exchange.

13. The system according to one of the claims 10 to 12,
wherein the communication module (130) is configured to employ at least one of the following (common) protocols: Bluetooth, ANT+, NFC, WiFi,
and wherein the communication module (130) is further configured to monitor the communication and to detect a non-authorized intrusion of a third person.

14. A method for an identification and for a bio monitoring in vehicles (200) with the following steps:
recording (S110), by means of a personal module (no), of personal data of a user (10);
identifying (S120) the user (10) based on the recorded personal data;
controlling (S130), by means of a vehicle-related module (120), of at least one vehicle component (230);
exchanging (S140) data between the personal module (110) and the vehicle-related module (120), regardless of whether the user (10) is in the vehicle (200) or outside; and
performing (S150) of changes, by means of the vehicle-related module (120), to the at least one vehicle component (230), based on the exchanged data,
**characterized in that**
the vehicle-related module (120) is configured as a secure gateway (420), which further performs the following steps:
storing of user-specific data only during a communication with the personal module (110); and
deleting the user-specific data after a predetermined period of time after termination of the communication,
wherein data generated in the vehicle (200) are analyzed, and only aggregated or specifically selected data and information are returned to the portable device (300).

15. A computer program product, with software stored thereon which is configured to perform a method for an identification and for a bio monitoring in a vehicle (200) with respect to a user with a personal module (110), wherein the personal module (110) is configured to access personal data for the user (10) and to thereby identify the user (10), and the personal module is implemented in a portable device (300), if the software is executed on a vehicle-related data processing unit, the method comprises:
controlling (S130), by means of a vehicle-related module (120), of at least one vehicle component (230);
exchanging (S140) data between the personal module (110) and the vehicle-related module (120), regardless of whether the user (10) is in the vehicle (200) or outside; and
performing (S150) of changes, by means of the vehicle-related module (120), to the at least one vehicle component (230), based on the exchanged data,
**characterized in that**
the vehicle-related module (120) is configured as a secure gateway (420), which further performs the following steps:
storing of user-specific data only during a communication with the personal module (110); and
deleting the user-specific data after a predetermined period of time after termination of the communication,
wherein data generated in the vehicle (200) are analyzed, and only aggregated or specifically selected data and information are returned to the portable device (300).

## Revendications

1. Système de gestion pour l'identification et la biosurveillance concernant au moins un utilisateur dans un véhicule (200), à l'aide d'un module lié à une personne (110), lequel est conçu pour accéder aux données personnelles de l'utilisateur (10) et identifier ainsi l'utilisateur (10), et le module lié à une personne (110) est mis en œuvre dans un appareil portable (300), le système de gestion comprend :
un module lié à un véhicule (120), lequel est conçu pour accéder à au moins un composant de véhicule (230) ; et
un module de communication (130), lequel est conçu pour permettre un échange de données entre le module lié à une personne (110) et le module lié à un véhicule (120), même si le module lié à une personne (110) se trouve à l'extérieur du véhicule (200),
le module lié à un véhicule (120) étant conçu pour commander ou permettre au moins une modification de l'au moins un composant de véhicule (230) sur la base des données échangées,
**caractérisé en ce que**
le module lié à un véhicule (120) est conçu sous la forme d'une passerelle sécurisée (420), de façon à :
stocker des données spécifiques à un utilisateur uniquement pendant une communication avec le module lié à une personne (110) et à les supprimer après une période de temps prédéterminée au terme de la communication, et à
évaluer les données recueillies dans le véhicule (200) et à ne renvoyer que des données et des informations agrégées ou spécifiquement sélectionnées à l'appareil portable (300).

2. Système de gestion selon la revendication 1, dans lequel le véhicule (200) présente un ou plusieurs capteurs (102, 103, ...) capables de détecter un état ou un mouvement de l'utilisateur (10) dans le véhicule (200),
et dans lequel le module lié à un véhicule (120) est en outre conçu pour accéder au ou aux capteurs (105, 106) et pour recevoir et traiter des informations sur l'état ou le mouvement de l'utilisateur de façon à déterminer au moins l'un des éléments suivants :
- une utilisation d'un siège spécifique,
- un réglage du siège,
- un changement d'état de forme physique,
- une détérioration de la santé,
- une fatigue,
- une confirmation d'un résultat obtenu ailleurs.

3. Système de gestion selon la revendication 2,
lequel présente en outre une unité d'évaluation ou est en outre conçu pour accéder à une unité d'évaluation externe au véhicule (200) ou à l'appareil portable (300) ou à un serveur externe afin d'agréger et d'évaluer des données liées à un utilisateur,
dans lequel le module de communication (130) est conçu en particulier pour transmettre des données à l'unité d'évaluation externe par l'intermédiaire d'une passerelle sécurisée.

4. Système de gestion selon l'une des revendications précédentes, dans lequel le module lié à un véhicule (120) est relié de manière fixe au véhicule (200), en particulier en tant que partie d'une unité de commande,
et dans lequel l'au moins un composant de véhicule (230) est un ou plusieurs des composants suivants ou une partie de ceux-ci :
- un ouvre-porte,
- un allumeur,
- un dispositif d'affichage d'image,
- une régulation d'accélération du véhicule (200),
- un système de freinage du véhicule (200),
- un système de communication, de navigation ou de divertissement,
- un module de réglage de siège,
- un module de réglage de volant,
- un module de réglage de rétroviseur,
- un module de régulation de température,
- une unité de massage.

5. Système de gestion selon l'une des revendications précédentes, dans lequel le module lié à un véhicule (120) est conçu pour fournir au véhicule (200) un signal d'authentification de façon à n'autoriser l'accès au composant de véhicule (230) ou à l'ensemble du véhicule (200) que lorsque l'utilisateur (10) a été identifié ou lorsque l'utilisateur (10) se trouve sur un siège attribué.

6. Système de gestion selon l'une des revendications précédentes, dans lequel le module lié à un véhicule (120) est conçu pour communiquer avec une pluralité de modules liés à une personne (110) et pour rendre les fonctions du véhicule (200) accessibles.

7. Véhicule (200) comportant un système de gestion selon l'une des revendications précédentes.

8. Véhicule (200) selon la revendication 7, dans lequel le véhicule (200) présente au moins l'un des capteurs suivants comme source(s) de données pour le système de gestion :
- une ou plusieurs caméras (104, 105),
- au moins un capteur de pression dans un siège de véhicule (102),
- un thermomètre,
- au moins un capteur de détection de mouvement,
- un capteur à ultrasons,
- un capteur infrarouge,
- un microphone (106),
- un dispositif de mesure de données biologiques, en particulier un EEG/ECG,
- un capteur de mesure de force,
- un capteur d'accélération,
- un hygromètre,
- un dispositif de mesure de conductibilité.

9. Système d'identification et de biosurveillance d'au moins un utilisateur (10) d'un véhicule (200), le système comprend :
un module lié à une personne (110), lequel est conçu pour accéder aux données personnelles de l'utilisateur (10) et identifier ainsi l'utilisateur (10) ; et
un système de gestion selon l'une des revendications 1 à 5.

10. Système selon la revendication 9, dans lequel l'appareil portable (300) comprend un instrument d'évaluation de données (418) et un instrument d'apprentissage d'algorithmes de données (441), l'instrument d'évaluation de données (418) étant conçu pour évaluer les données sur la base d'algorithmes de données, et l'instrument d'apprentissage d'algorithmes de données (441) étant conçu pour développer davantage les algorithmes de données sur la base d'un processus d'apprentissage automatique ou pour développer de nouveaux algorithmes de données en utilisant une intelligence artificielle,
et le module lié à un véhicule (120) étant conçu pour recevoir les algorithmes de données provenant du module lié à une personne (110) et pour effectuer une évaluation des données sur la base de cette réception.

11. Système selon la revendication 9 ou 10,
dans lequel le module lié à une personne (110) est un appareil portable ou une partie de celui-ci, et les données personnelles comprennent au moins l'un des éléments suivants :
- un mot de passe,
- une empreinte digitale,
- une image,
- un scan de l'iris des yeux,
- une activité cardiaque caractéristique,
- un pouls,
- un composant ou une propriété du sang,
- une température,
- une information de localisation.

12. Système selon la revendication 10 ou 11,
dans lequel le module lié à une personne (110) est conçu pour collecter des données spécifiques à la santé de l'utilisateur (10) et pour fournir, en tant que données à échanger, des informations sur des détériorations potentielles de la santé, lesquelles informations pouvant affecter la capacité à conduire.

13. Système selon l'une des revendications 10 à 12,
dans lequel le module de communication (130) est conçu pour utiliser au moins l'un des protocoles (courants) suivants : Bluetooth, ANT+, NFC, WiFi,
et dans lequel le module de communication (130) est en outre conçu pour surveiller la communication et pour reconnaître une intrusion non autorisée par un tiers.

14. Procédé d'identification et de biosurveillance dans des véhicules (200), comportant les étapes suivantes :
collecte (S110), par un module lié à une personne (110), de données personnelles d'un utilisateur (10) ;
identification (S120) de l'utilisateur (10) sur la base des données personnelles collectées ;
commande (S130), par un module lié à un véhicule (120), d'au moins un composant de véhicule (230) ;
échange (S140) de données entre le module lié à une personne (110) et le module lié à un véhicule (120), indépendamment du fait que l'utilisateur (10) se trouve dans le véhicule (200) ou à l'extérieur ; et
réalisation (S150) de modifications, par le module lié à un véhicule (120), de l'au moins un composant de véhicule (230) sur la base des données échangées,
**caractérisé en ce que**
le module lié à un véhicule (120) est conçu sous la forme d'une passerelle sécurisée (420) qui exécute en outre les étapes suivantes :
stockage de données spécifiques à l'utilisateur uniquement pendant une communication avec le module lié à une personne (110) ; et
suppression des données spécifiques à l'utilisateur après une période de temps prédéterminée au terme de la communication,
les données recueillies dans le véhicule (200) étant évaluées et seules les données et informations agrégées ou spécifiquement sélectionnées étant renvoyées à l'appareil portable (300).

15. Produit programme informatique comportant un logiciel stocké sur celui-ci, lequel logiciel est conçu pour exécuter un procédé d'identification et de biosurveillance concernant au moins un utilisateur dans un véhicule (200), à l'aide d'un module lié à une personne (110),
dans lequel le module lié à une personne (110) est conçu pour accéder aux données personnelles de l'utilisateur (10) et pour ainsi identifier l'utilisateur (10), et le module lié à une personne (110) est mis en œuvre dans un appareil portable (300), le procédé étant exécuté lorsque le logiciel est exécuté sur une unité de traitement de données liée à un véhicule, le procédé comprend :
la commande (S130), par un module lié à un véhicule (120), d'au moins un composant de véhicule (230) ;
l'échange (S140) de données entre le module lié à une personne (110) et le module lié à un véhicule (120), indépendamment du fait que l'utilisateur (10) se trouve dans le véhicule (200) ou à l'extérieur ; et
la réalisation (S150) de modifications, par le module lié à un véhicule (120), de l'au moins un composant de véhicule (230) sur la base des données échangées,
**caractérisé en ce que**
le module lié à un véhicule (120) est conçu sous la forme d'une passerelle sécurisée (420) qui exécute en outre les étapes suivantes :
stockage de données spécifiques à l'utilisateur uniquement pendant une communication avec le module lié à une personne (110) ; et
suppression des données spécifiques à l'utilisateur après une période de temps prédéterminée au terme de la communication,
les données recueillies dans le véhicule (200) étant évaluées et seules les données et informations agrégées ou spécifiquement sélectionnées étant renvoyées à l'appareil portable (300).
